# EUROPÄISCHE PATENTSCHRIFT

(11) **EP 2 992 324 B1**
(45) Veröffentlichungstag und Bekanntmachung des Hinweises auf die Patenterteilung: **04.01.2023**
(21) Anmeldenummer: 14714269.9
(22) Anmeldetag: 31.03.2014
(51) Int. Cl.: G01N 30/20, G01N 35/10

(54) **PROBENGEBER FÜR EINE ANALYSEVORRICHTUNG**
SAMPLE DISPENSER FOR AN ANALYTICAL DEVICE
DISTRIBUTEUR D'ÉCHANTILLON POUR UN DISPOSITIF D'ANALYSE

(30) Priorität: 30.04.2013 DE 102013104404
(43) Veröffentlichungstag der Anmeldung: 09.03.2016
(73) Patentinhaber: Hamilton Bonaduz AG, 7402 Bonaduz (CH)
(72) Erfinder: LECKEBUSCH, Klaus, CH-7425 Masein (CH); OTTE, Tino, 6064 Kerns (CH)
(74) Vertreter: Schmitt-Nilson Schraud Waibel Wohlfrom Patentanwälte Partnerschaft mbB
(86) Internationale Anmeldenummer: PCT/EP2014/056432
(87) Internationale Veröffentlichungsnummer: WO 2014/177331

(56) Entgegenhaltungen:
- US-A- 3 100 984
- US-A- 3 160 015
- US-A- 4 128 008
- US-B1- 6 632 404

## Beschreibung

Die vorliegende Erfindung betrifft einen Probengeber für eine Analysevorrichtung zur Analyse einer flüssigen oder gasförmigen Probe, insbesondere für eine nach dem Prinzip der Chromatographie arbeitende Analysevorrichtung.

Die Erfindung ist insbesondere auf dem Gebiet der Flüssigkeitschromotographie (LC), Hochleistungsflüssigkeitschromatographie (HPLC) oder Gaschromatographie (GC) anwendbar.

Heutzutage dient in der Flüssigkeitschromotographie, Hochleistungsflüssigkeitschromatographie (HPLC) oder Gaschromatographie ein fest installiertes Hochdruck-Injektionsventil zur Probeninjektion. Das Hochdruck-Injektionsventil ist ein in der Regel recht komplexes Bauteil, das über mehrere Anschlüsse verfügt und zwischen einer Aufnahmestellung und einer Injektionsstellung umgeschaltet werden kann. Für möglichst genaue Analysen ist eine gleichmäßige Beaufschlagung der jeweils verwendeten Trennsäulen mit mobiler Phase erforderlich. Daher ist es wichtig, dass der Umschaltvorgang des Injektionsventils einen möglichst geringen Einfluss auf die Strömung von mobiler Phase über die Trennsäule nimmt. Außerdem sollen selbstverständlich mögliche Kontaminationsquellen so weit als möglich ausgeschaltet werden. Dies ist vor allem dann problematisch, wenn viele Proben nacheinander analysiert werden sollen.

Ein Beispiel für ein gängiges in der Flüssigkeitschromatographie verwendetes Probengebersystem zeigt die US 3 918 913. Dort wird zur Probeninjektion ein sog. 6-Port-Ventil eingesetzt. Das 6-Port-Ventil hat eine grundsätzlich rotationssymmetrische Konfiguration mit einem Ventilkörper und einem um eine Ventilachse drehbaren Stellglied. Im Ventilkörper sind 6 Anschlüsse ausgebildet, wobei durch Drehung des Stellglieds wahlweise immer zwei benachbarte Anschlüsse miteinander verbunden werden können. Ein erster Anschluss des Ventilkörpers bildet einen Eluenteingang, d.h. über diesen Anschluss wird Eluent, der - ggf. mit zugesetzter zu analysierender Substanz - die über die Trennsäule strömende mobile Phase bildet, zugeführt. Ein weiterer Anschluss des Ventilkörpers ist der Trennsäule zugeordnet, d.h. bildet einen Säulenausgang, über den Eluent oder mit zu analysierender Substanz versetzter Eluent der Trennsäule zugeführt wird. Die übrigen vier Anschlüsse des Ventilkörpers sind einem Probengebersystem zugeordnet. Zwei dieser vier Anschlüsse des Probengebersystems sind durch eine externe Probenschleife bzw. "Sample Loop" in ständiger Fluidverbindung. Ein Anschluss des Probengebersystems dient als Probeneingang, durch den die zu analysierende Probe zuführbar ist. Ein weiterer Anschluss ist in der Regel mit einer Dosierpumpe oder ähnlichem verbunden um die zu analysierende Probe in die Probenschleife aufzunehmen und ggf. wieder abzuleiten.

In einer Aufnahmestellung des Injektionsventils ist der Eluenteingang mit dem Säulenausgang verbunden und die vier Anschlüsse des Probengebersystems sind miteinander verbunden, so dass eine zu analysierende Substanz (im Folgenden auch kurz als Probe bezeichnet) vom Probeneingang in die Probenschleife aufgenommen werden kann. Durch Verdrehung des Injektionsventils in eine Injektionsstellung kann dann die Probenschleife in Fluidverbindung mit dem Eluenteingang und dem Säulenausgang geschaltet werden, so dass die Probe sich mit Eluent vermischt und zur Trennsäule gelangt.

In der Injektionsstellung des Injektionsventils kann über die verbleibenden beiden Anschlüsse des Probengebersystems überschüssiges Probenvolumen entfernt werden. Vor Analyse einer weiteren Probe ist es erforderlich, das gesamte Probengebersystem aufwändig zu spülen, um Kontamination zu vermeiden. Dies ist besonders problematisch im Bereich der Probenschleife, weil in diesem Bereich verbleibende Fremdstoffe unmittelbar zur Trennsäule gelangen, dieser Bereich allerdings nur durch den Eluentstrom bzw. nach erfolgter Injektion der Probe und Rückführung des Injektionsventils in die Aufnahmestellung gespült werden kann. Gerade bei HPLC-Anwendungen ist Kontamination der Probenschleife ein nur schwer beherrschbares Problem, denn die Probenschleife wird bei relativ niedrigen Drücken in Aufnahmestellung des Injektionsventils gefüllt und gespült, befindet sich aber in der Injektionsstellung unter dem hohen Druck, mit dem der Eluent/Proben-Strom auf die Trennsäule gedrückt wird.

Aus der DE 10 2007 000 622 A1 ist eine in eine Probenschleife eines Injektionsventils für HPLC einsetzbare Einweg-Probenaufnahmevorrichtung bekannt. Diese Einweg-Probenaufnahmevorrichtung besteht aus einem Behälter zum Aufnehmen eines Probenvolumens, der mittels einer an einem stromaufwärts liegenden Ende des Behälters angeordneten ersten Kupplung sowie einer am stromabwärts liegenden Endes des Behälters angeordneten zweiten Kupplung mit der Probenschleife koppelbar ist. Der Behälter wird extern über die erste oder zweite Kupplung mit Probenvolumen befüllt und dann mittels erster und zweiter Kupplung in die Probenschleife eingesetzt. Danach erfolgt mittels des 6-Port-Injektionsventils die Aufschaltung des Eluentflusses auf die Probenschleife. Nach erfolgter Analyse wird das Injektionsventil in die Aufnahmestellung zurückgeschaltet und der Einweg-Behälter in der Probenschleife kann durch einen neuen Einweg-Behälter mit der nächsten zu analysierenden Probe ersetzt werden. Ein ähnlich arbeitendes Probengebersystem für HPLC Anwendungen ist aus der WO 2010/084180 bekannt, bei dem Pipettenspitzen derart ausgebildet sind, dass sie als Einweg-Behälter in die Probenschleife einsetzbar sind.

US 3 100 984 A zeigt einen Probengeber zum mehrmaligen Gebrauch mit einem in axialer Richtung verschiebbaren Stellglied.

US 3 160 015 A zeigt einen Probengeber zum mehrmaligen Gebrauch mit einem Ventilkörper, einem Stellglied und einem in das Stellglied einzusetzendes Inlet.

US 6 632 404 B1 zeigt einen Probengeber, der mehrere Materialproben in mehrere Flüssigkeits- oder Gasströme einbringen kann. Ein solcher Probengeber ist besonders nützlich zum Injizieren mehrerer Proben in ein kombinatorisches Chemiesystem mit sich bewegenden Flüssigkeitsströmen, wie einem Paralleldruckreaktor oder einem Schnellflussanalysesystem unter Verwendung von Mehrkanal- oder Parallelchromatographie und verwandten Techniken.

US 4 128 008 A zeigt einen Probengeber, der für den mehrmaligen Gebrauch ausgebildet ist und der ein Stellglied aufweist, welches in axialer Richtung verschiebbar ist.

WO 2012/116390 A1 offenbart ein Drehventil als Einweg-Probengeber, wobei eine plastische Verformung eines Ventilteils vorgesehen ist.

Der vorliegenden Erfindung liegt die Aufgabe zugrunde, einen Probengeber zur Analyse von Proben bereitzustellen, der deutlich einfacher aufgebaut ist und dennoch auch bei Analyse von Proben mit geringen und geringsten Konzentrationen Kontaminationseffekte sicher unterdrückt. Der Probengeber soll insbesondere zur Analyse von flüssigen oder gasförmigen Proben mittels nach dem Prinzip der Chromatographie arbeitender Analysevorrichtungen geeignet sein, beispielsweise in der Hochleistungsflüssigkeitschromatographie (HPLC), Flüssigkeitschromatographie (LC) oder Gaschromatographie (GC).

Diese Aufgabe wird erfindungsgemäß gelöst durch einen Probengeber für eine Analysevorrichtung gemäß des Anspruchs 1.

Damit wird sowohl die Probenschleife als auch das Injektionsventil durch ein Einweg-Bauteil ersetzt, über welches der Prozess der Aufnahme und Injektion einer zu analysierenden Probe in das Analysesystem grundsätzlich vollständig ablaufen kann. Dies schafft die Möglichkeit, bei Analyse von vielen unterschiedlichen Proben nacheinander für jede Probe jeweils den ganzen Probengeber auszutauschen. Da auf diese Weise praktisch alle mit der zu analysierenden Probe in Kontakt gelangenden Teile nach Analyse der Probe verworfen werden können, entfallen aufwändige Spülprozeduren, die bei herkömmlichen Probengebersystemen unbedingt erforderlich waren, um Kontaminationseffekte zwischen aufeinander folgend analysierten Proben einigermaßen unterdrücken zu können. Kontamination zwischen aufeinander folgend analysierten Proben kann auch ohne Spülprozesse praktisch ausgeschlossen werden.

Der Probengeber ist im Wesentlichen zum einmaligen Gebrauch bestimmt, d.h. die Injektionsventilanordnung ist so ausgebildet, dass man sie im Wesentlichen nur einmal verwenden kann. Im Wesentlichen soll darauf hinweisen, dass zwar grundsätzlich ein mehrmaliges Umschalten zwischen Aufnahmestellung und der Injektionsstellung möglich sein kann, dass allerdings derartiges hin und her Schalten jedenfalls nicht beliebig oft möglich sein soll oder nicht ohne gewisse Einschränkungen in Kauf nehmen zu müssen möglich sein soll.

Der Eingang ist mit einem Eluentstrom verbindbar, durch den dem Probengeber ein Eluent zuführbar, der als mobile Phase zur Analysevorrichtung, beispielsweise der Trennsäule einer Chromatographievorrichtung, geleitet wird. Der Ausgang steht mit der Analysevorrichtung, beispielsweise der Trennsäule, in Verbindung, so das der - ggf. mit der zu analysierenden Probe versetzte - Eluent vom Probengeber als mobile Phase zur Analysevorrichtung geführt werden kann. In der Regel wird in Aufnahmestellung der Injektionsventilanordnung im Eluentstrom nur Eluent geführt, d.h. es wird nur Eluent vom Ausgang als mobile Phase zur Analysevorrichtung geliefert. In Injektionsstellung der Injektionsventilanordnung wird normalerweise der vom Eluenteingang kommende Eluent mit der zu analysierenden Probe versetzt und dann über den Ausgang zur als mobile Phase Analysevorrichtung geliefert.

Die Probenaufnahme ist insbesondere ebenfalls in das Einweg-Bauteil integrierbar, sei es als ein in dem Einweg-Bauteil ausgebildetes Volumen oder als ein mit diesem Einweg-Bauteil verbindbares separates Bauteil. Um Kontaminationseffekte zu reduzieren empfiehlt es sich, auch die Probenaufnahme als Einweg-Bauteil auszubilden.

Bevorzugte optionale Weiterbildungen des Probengebers sollen im Folgenden näher erläutert werden.

Der Probengeber kann ferner einen Probenanschluss umfassen, durch den in der Aufnahmestellung der Injektionsventilanordnung die zu analysierende Probe in die Probenaufnahme aufnehmbar ist. Der Probenanschluss kann auf ein jeweils zu verwendendes Probenaufbereitungssystem abgestimmt sein, beispielsweise als Sitz zur Aufnahme von mit den zu analysierenden Proben gefüllten Pipetten bzw. Pipettenspitzen ausgebildet sein oder ein Kupplungssystem zum Andocken von bestimmten Probenbehältern umfassen. Um Kontaminationseffekte sicher unterdrücken zu können, wird es sich in der Regel empfehlen, auch den Probenanschluss als Einweg-Bauteil auszubilden. Der Probenanschluss kann im einfachsten Fall als integraler Teil des Probengebers ausgebildet sein. Mehr Flexibilität in der Fertigung kann man erreichen, indem man einen universal einsetzbaren Probengeber mit unterschiedlichen Probenanschlüssen koppelt.

Der Probengeber umfasst einen Ventilkörper und ein relativ zu dem Ventilkörper bewegbares Stellglied. Ventilkörper und Stellglied können dann zusammenwirken, um gemeinsam die Injektionsventilanordnung zu realisieren. Beispielsweise kann ein auf das Stellglied einwirkender Stellantrieb vorgesehen sein, insbesondere ein elektrischer Servomotor, um das Stellglied relativ zum Ventilkörper zwischen der Aufnahmestellung und der Injektionsstellung zu verlagern. In dem Stellglied und/oder zwischen dem Stellglied und dem Ventilkörper kann wenigstens eine Fluidverbindung ausgebildet sein, durch welche zumindest in Aufnahmestellung der Injektionsventilanordnung Eluent strömen kann. Die Fluidverbindung kann Teil eines zwischen dem Eluenteingang und dem dem Ausgang gebildeten Eluentdurchgangs sein, durch den Eluent vom Eluenteingang zum Ausgang strömen kann. Nach Überführung der Injektionsventilanordnung in die Injektionsstellung kann die in dem Stellglied und/oder zwischen dem Stellglied und dem Ventilkörper gebildete Fluidverbindung derart modifiziert sein, dass ein mit der zu analysierenden Probe vereinigter Eluentstrom durch den Eluentdurchgang zum Ausgang gelangt.

In vielen Fällen lässt sich die Probenaufnahme wenigstens zum Teil in dem Stellglied ausbilden. Das schafft die Möglichkeit, bei in Aufnahmestellung befindlichem Stellglied eine Probe in die Probenaufnahme einzubringen und dann erst durch Verlagerung des Stellglieds die in der Probenaufnahme befindliche Probe in den Eluentstrom einzuschleusen.

Konstruktiv kann man beispielsweise in dem Ventilkörper wenigstens einen Strömungskanal ausbilden, der - ggf. in Zusammenwirkung mit dem Stellglied - zumindest in der Aufnahmestellung und in der Injektionsstellung der Injektionsventilanordnung den Eluentdurchgang zwischen dem Eluenteingang und dem Ausgang des Probengebers herstellt. Beispielsweise kann der Strömungskanal von dem Eluenteingang ausgehend bei in Aufnahmestellung befindlichem Stellglied und bei in Injektionsstellung befindlichem Stellglied in den Ausgang des Probengebers münden. Es kann zweckmäßig sein, den Eluentdurchgang mittels des Strömungskanals und wenigstens teilweise unter Mitwirkung des Stellglieds auszubilden. Dann kann mit Hilfe des Stellglieds der Strömungskanal unterbrochen werden, wenn sich das Stellglied nicht in der Aufnahmestellung befindet. Insbesondere der in Aufnahmestellung ausgebildete Strömungskanal kann mit dem Stellglied in einer solchen Weise zusammenwirken, dass ein Eluentdurchgang entsteht, durch den reiner Eluent vom Eingang zum Ausgang gelangt. Der in Injektionsstellung ausgebildete Strömungskanal kann mit dem Stellglied in einer solchen Weise zusammenwirken, dass ein Eluent/Probe-Durchgang entsteht, durch den mit Probe versetzter Eluent zum Ausgang gelangt..

In vielen Fällen ist es günstig, wenn die Injektionsventilanordnung ferner in eine weitere Stellung umschaltbar ist, in welcher keine Fluidverbindung zwischen Eingang und Ausgang besteht. Eine solche Stellung kann beispielsweise erzielt werden, wenn der Strömungskanal und das Stellglied in einer solchen Weise zusammenwirken, dass der Eluentdurchgang bzw. der Eluent/Probe-Durchgang unterbrochen sind. Eine solche Stellung kann als im Wesentlichen transiente Zwischenstellung beim Umschalten zwischen Aufnahmestellung und Injektionsstellung angefahren werden. Es kann in bestimmten Fällen auch sinnvoll sein, eine solche Stellung dauerhaft anzufahren, beispielsweise nach erfolgter Probeninjektion, um weitere Injektion von mit Probe kontaminiertem Fluid durch die jeweilige Injektionsventilanordnung zu verhindern. Dann ist es günstig, wenn die Injektionsventilanordnung aus der Injektionsstellung noch in eine weitere Stellung umschaltbar ist, in der der Eluentdurchgang bzw. der Eluent/Probe-Durchgang unterbrochen sind. Diese Stellung kann beispielsweise durch weitere Verlagerung des Stellglieds in Vorschubrichtung über die Injektionsstellung hinaus realisiert werden. Dies bietet sich beispielsweise im Falle eines Probengebers an, der über eine Mehrzahl von Injektionsventilanordnungen verfügt, die alle demselben Eingang und/oder Ausgang zugeordnet sind. Es ist dann möglich, die einzelnen Injektionsventilanordnungen eine nach der anderen zu aktivieren, ohne dass zur Vermeidung von Kreuzkontaminationseffekten aufwändige Ventile nötig werden, weil jede Injektionsventilanordnung nach erfolgter Injektion in einen Zustand fährt, in dem sie von allen anderen fluiddicht getrennt ist.

In Ausführungsbeispielen kann der Ventilkörper einen Hohlraum aufweisen, in welchem das Stellglied aufgenommen ist. Das Stellglied kann dann, je nach Stellung relativ zum Ventilkörper, mit der den Hohlraum umgebenden Innenwand des Ventilkörpers zusammenwirken, um die Probenaufnahme fluiddicht gegenüber dem vom Eluent durchströmten Eluentdurchgang abzudichten. Stellglied und Hohlrauminnenwand können darüber hinaus derart zusammenwirken, dass auch in anderer Stellung des Stellglieds eine fluiddichte Abdichtung entsteht, beispielsweise um in der Injektionsstellung die Probenaufnahme
- diese bildet dann einen Abschnitt des vom Eluent bzw. von der Probe durchströmten Eluentdurchgangs zwischen Eingang und Ausgang - fluiddicht gegenüber dem Ventilkörper abzudichten. Der oben angesprochene im Ventilkörper ausgebildete Strömungskanal quert bevorzugt den Hohlraum, so dass mittels Zusammenwirkung des Strömungskanals mit dem Stellglied in der Aufnahmestellung der Eluentdurchgang entsteht und in der Injektionsstellung der Eluent/Probe-Durchgang entsteht.

Es ist darüber hinaus günstig, wenn die Probenaufnahme einen in dem Stellglied und/oder zwischen dem Stellglied und dem Ventilkörper ausgebildeten Dosierraum umfasst, der in Aufnahmestellung der Injektionsventilanordnung mit dem Probenanschluss in Fluidverbindung steht oder in Fluidverbindung bringbar ist. Die Probenaufnahme kann dann durch den Dosierraum gebildet werden sowie ggf. noch einen insbesondere im Ventilkörper ausgebildeten Kanal umfassen, der den Dosierraum mit den Probenanschluss verbindet. Um die Menge bzw. das Volumen einer zu analysierenden Probe genau festlegen zu können, ist es zweckmäßig, wenn der Dosierraum ein vorbestimmtes Volumen aufweist. Dies ist insbesondere wichtig für quantitative Analysen. Es ist auch besonders günstig, wenn das Volumen der Probenaufnahme und/oder des Dosierraums einstellbar ist, so dass unterschiedlich große Proben analysiert werden können. Beispielsweise kann der Probengeber auch einen mit dem Dosierraum oder mit einem mit dem Dosierraum in Fluidverbindung stehenden Hohlraum zusammenwirkenden Dosierkolben aufweisen, um das Volumen der Probenaufnahme und/oder des Dosierraums einzustellen. Auch dem Dosierkolben kann ein Stellantrieb zugeordnet sein, mittels dem das Volumen der Probenaufnahme und/oder des Dosierraums quantitativ einstellbar ist. Der Dosierkolben kann derart ausgebildet sein, dass er auf die Probenaufnahme und/oder den Dosierraum zur Veränderung des Volumens desselben einwirkt, wenn sich die Injektionsventilanordnung in Aufnahmestellung befindet.

In bestimmten Ausführungsformen, insbesondere dann, wenn eine zu analysierende Probe nur ein geringes Volumen aufweist oder verdünnt werden soll, bevor sie in den Eluentstrom eingeschleust wird, besteht die Möglichkeit, die Probenaufnahme derart auszubilden, dass sie mit Eluent oder einem anderen Fluid vorfüllbar ist, bevor die Probe in die Probenaufnahme eingebracht wird. Insbesondere kann dann ein Teilvolumen des Dosierraums bereits vorgefüllt sein, so dass nur noch ein Restvolumen mit der durch den Probenanschluss eingebrachten Probe aufgefüllt werden muss, um den gesamten Dosierraum zu füllen. Um beim Umschalten zwischen der Aufnahmestellung und der Injektionsstellung den Fluidstrom zwischen Eluenteingang und Ausgang möglichst wenig zu stören, ist man grundsätzlich bestrebt, das im Dosierraum befindliche Fluid in einem Zustand in den zwischen Eluenteingang und Ausgang gebildeten Eluentdurchgang einzuschleusen, der dem thermodynamischen Zustand bzw. dem strömungsdynamischen Zustand des Eluentstroms möglichst nahekommt. Insbesondere sollte beim Umschalten in die Injektionsstellung eine der Menge des aus dem Dosierraum eingeschleusten Fluids entsprechende Menge an Eluent aus dem in dem Strömungskanal bzw. Eluentdurchgang strömenden Eluent entnommen werden. Bei Flüssigkeiten bedeutet dies, dass das das Volumen an zugesetztem Fluid (Probe, ggf. mit weiterem Fluid verdünnt) gleich dem Volumen an entnommenem Eluent sein sollte. Alternativ könnte das Volumen des Eluent/Probe-Durchgangs gegenüber dem Eluentdurchgang um das Volumen des eingeschleusten Fluids vergrößert sein. Insbesondere bei Gasen wird man zusätzlich darauf achten, dass das eingeschleuste Gasvolumen (Probe und ggf. Eluent) bei einem Druck eingeschleust wird, der nur geringfügig größer ist als der im Eluentdurchgang herrschende Druck. Soweit gewünscht, kann die Vorbefüllung der Probenaufnahme auch mit einem von dem Eluent verschiedenen Fluid erfolgen. Das Vorbefüllen mit Fluid bzw. Eluent kann in Aufnahmestellung der Injektionsventilanordnung erfolgen oder in einer eigens dafür vorgesehenen Vorfüllstellung der Injektionsventilanordnung, in der sichergestellt ist, dass der zum Ausgang gelieferte Eluentstrom (dieser strömt ja über die Trennsäule) während des Vorbefüllvorgangs nicht gestört wird.

In einer einfachen Konstruktion kann die Vorbefüllung über den Probenanschluss erfolgen. Dann kann die Injektionsventilanordnung während der Vorbefüllung in der Aufnahmestellung verbleiben.

Weitaus mehr Möglichkeiten hat man aber, wenn die Injektionsventilanordnung neben der Aufnahmestellung und der Injektionsstellung noch mindestens eine Vorfüllstellung aufweist, in der die Probenaufnahme mit Eluent oder einem anderen Fluid vorbefüllbar ist. Dabei kann es günstig sein, wenn die Vorbefüllung nicht über den Probenanschluss erfolgt, sondern über einen eigens vorgesehen Zugang zur Probenaufnahme. Um aus der Vorfüllstellung zur Aufnahme der zu analysierenden Probe zu gelangen, sollte dann die Injektionsventilanordnung wenigstens umschaltbar sein von der Vorfüllstellung in die Aufnahmestellung. Besonders elegant ist es, wenn bei in der Vorfüllstellung befindlicher Injektionsventilanordnung wenigstens ein Teil der Probenaufnahme in Fluidverbindung mit dem Eluentstrom steht. Dies kann beispielsweise mit Hilfe einer geeigneten Abzeigung aus dem den Eluenteingang mit dem Ausgang verbindenden Strömungskanal geschehen. Die Abzweigung sollte in Vorfüllstellung in die Probenaufnahme münden, in allen anderen Stellungen aber fluiddicht von der Probenaufnahme getrennt sein. Die Abzweigung kann beispielsweise stromabwärts des Eluenteingangs abzweigen und stromaufwärts der Stelle, an der in Injektionsstellung die zu analysierende Probe in den Eluentstrom eingeschleust wird, wieder in den Strömungskanal münden. Durch die Abzweigung strömender Eluent wird dann in Vorfüllstellung die Probenaufnahme durchströmen und insbesondere den Dosierraum füllen. Schaltet man die Injektionsventilanordnung dann in die Aufnahmestellung, so dass die Probenaufnahme bzw. der Dosierraum in Kontakt mit dem Probenanschluss gelangt, ist der Dosierraum komplett mit Eluent gefüllt. In diesem Fall kann vorgesehen sein, dass ein Dosierelement, beispielsweise der oben bereits angesprochene Dosierkolben, in der Aufnahmestellung auf die Probenaufnahme und/oder den Dosierraum zur Veränderung des Volumens derselben einwirkt. Insbesondere ist es günstig, wenn mit Hilfe eines solchen Dosierelements das Volumen der Probenaufnahme vergrößert werden kann mit der Folge, dass das im Dosierraum befindliche Volumen an Eluent in dem Maße der Vergrößerung des Volumens der Probenaufnahme durch das Dosierelement kleiner wird. Das so entstehende Restvolumen im Dosierraum kann dann mit Probe aufgefüllt werden. Auf diese Weise lässt sich mit guter Präzision die in den Dosierraum eingebrachte Probenmenge quantitativ festlegen, so dass auch für sehr kleine Probenvolumina reproduzierbare quantitative Analysen durchführbar sind.

Weiterhin kann vorgesehen sein, dass zumindest in Aufnahmestellung der Injektionsventilanordnung das Stellglied derart mit dem Ventilkörper zusammenwirkt, dass Probenaufnahme und Eluentdurchgang hinsichtlich Eluent und/oder Probe fluiddicht voneinander getrennt sind. Das Stellglied wird also in bestimmten Bereichen im Wesentlichen eine fluiddichte Verbindung mit dem Ventilkörper herstellen, in anderen Bereichen jedoch gerade einen Fluiddurchgang ermöglichen, beispielsweise zwischen einem stromaufwärts liegenden, an den Eluenteingang anschließenden ersten Teil und einem stromabwärts liegenden, in den Ausgang mündenden zweiten Teil des Strömungskanals.

Das Stellglied ist derart relativ zum Ventilkörper bewegbar, dass nach Überführung in die Injektionsstellung die Probenaufnahme, insbesondere der Dosierraum, mit dem den Eluentdurchgang bildenden Strömungskanal in Fluidverbindung gelangt und sich dann in der Injektionsstellung der Eluent/Probe-Durchgang bildet. Im Falle, dass der Dosierraum vollständig in dem Stellglied ausgebildet ist, kann dies dadurch geschehen, dass durch entsprechende Verlagerung des Stellglieds ein stromaufwärts liegendes Ende des Dosierraums mit dem oben erwähnten stromaufwärts liegenden ersten Teil des Strömungskanals in Fluidverbindung gelangt und ein stromabwärts liegendes Ende des Dosierraums mit dem oben erwähnten stromabwärts liegenden zweiten Teil des Strömungskanals in Fluidverbindung gelangt.

Das Stellglied ist gegenüber dem Ventilkörper entlang einer Vorschubrichtung, insbesondere entlang einer axialen Richtung, des Stellglieds, bewegbar, um die Injektionsventilanordnung von der Aufnahmestellung in die Injektionsstellung zu überführen. Man schiebt oder drückt gewissermaßen das Stellglied in den Ventilkörper hinein. Sofern die Injektionsventilanordnung aus der Injektionsstellung noch in eine weitere Stellung umschaltbar ist, in der der Eluentdurchgang bzw. der Eluent/Probe-Durchgang unterbrochen sind, kann vorgesehen sein, diese weitere Stellung durch weitere Verlagerung des Stellglieds in Vorschubrichtung über die Injektionsstellung hinaus zu realisieren. Dies bietet insbesondere dann Vorteile, wenn mit zunehmender Verlagerung des Stellglieds in Vorschubrichtung irreversible Effekte, z.B. plastische Verformung des Ventilkörpers, auftreten. Soche Effekt können dazu führen, dass bei Verlagerung des Stellglieds in Rückwärtsrichtung in eine an sich fluiddichte Zwischenstellung, die an sich gegebene Fluiddichtigkeit beeinträchtigt ist, weil Stellglied und Ventilkörper nicht mehr gut genug aneinander gepresst werden.

Es hat sich gezeigt, dass die erforderliche Fluiddichtheit zwischen Stellglied und Ventilkörper erreicht werden kann, wenn das Stellglied in einem Presssitz gegenüber dem Ventilkörper sitzt, derart dass bei Überführung des Stellglieds
aus der Aufnahmestellung in Richtung zur Injektionsstellung die Pressung jedenfalls nicht abnimmt, vorzugsweise zunimmt. Derartige Presssitze können in einer Art und Weise ausgestaltet sein, wie es bei der Konstruktion von Regelventilen in Heizungs-, Lüftungs- und Klimaanlagen beispielsweise aus der EP 1 128 109 A1 bekannt ist.

In der Aufnahmestellung kommt es vor allem darauf an, dass der zwischen dem Eluenteingang und dem Ausgang gebildete Eluentdurchgang beim Passieren des Stellglieds bzw. eines mit dem Ventilkörper zusammenwirkenden Bereichs des Stellglieds nicht blockiert wird, dass allerdings gleichzeitig eine fluiddichte Trennung zur Probenaufnahme entsteht. Dies erfordert eine vergleichsweise lockere Zusammenwirkung zwischen Stellglied und Ventilkörper im Bereich des zwischen Eluenteingang und Ausgang gebildeten Eluentdurchgangs oder aber eine entsprechende Konturierung von Stellglied und Ventilkörper in diesem Bereich, beispielsweise mit entsprechenden Vertiefungen und/oder Erhebungen an ihren jeweiligen Oberflächen. Allerdings sollte in einem zwischen dem Eluentdurchgang und der Probenaufnahme liegenden Bereich durchaus ein vergleichsweise fester Sitz des Stellglieds im Ventilkörper ausgebildet sein, um die Fluiddichtigkeit gegenüber der Probenaufnahme zu gewährleisten. Nach erfolgter Umschaltung in die Injektionsstellung muss eine Fluidverbindung des Dosierraums zum Strömungskanal geschaffen werden, so dass das die im Dosierraum enthaltene Probe, ggf. bereits mit Eluent oder einem anderen Fluid versetzt, sich mit dem durch den Eluentdurchgang strömenden Eluent vereinigen kann. In bestimmten Ausführungsformen ersetzt der Dosierraum einen Teil des Eluentdurchgangs, um dann den Eluent/Probe-Durchgang zu bilden. Dabei kommt es darauf an, dass der Eluent/Probe-Durchgang den Eluentdurchgang so nahtlos wie möglich ersetzt. Die jeweils miteinander zusammenwirkenden Endbereiche von Dosierraum und Strömungskanal sollten dazu relativ genau und möglichst fluiddicht gegenüber ihrer Umgebung aneinander anschließen. Dies lässt sich durch etwas höhere Presskräfte recht gut realisieren. Allerdings sollte man darauf achten, dass die Presskräfte nicht zu groß werden, weil dann die Gefahr besteht, dass sich der in der Injektionsstellung gebildete Eluent/Probe-Durchgang gegenüber dem Eluentdurchgang merklich verengt.

Es hat sich herausgestellt, dass die beschriebenen Anforderungen gut erfüllt werden können, wenn das Stellglied in seinem mit dem Ventilkörper zusammenwirkenden Bereich eine sich in Vorschubrichtung verjüngende Form aufweist, insbesondere konisch oder kegelstumpfförmig ausgebildet ist. Dabei wirkt das Stellglied mit einem entsprechend geformten Hohlraum des Ventilkörpers zusammen, so dass die zwischen Stellglied und Ventilkörper wirkenden Presskräfte generell beim Umschalten zwischen Aufnahmestellung und Injektionsstellung zunehmen. Ein Stellglied mit sich verjüngendem Querschnitt weist die Eigenschaft auf, dass in einer orthogonal zur Vorschubrichtung liegenden Ebene der Querschnitt des Stellglieds - ohne Berücksichtigung von etwaig ausgebildeten Strukturen zur Bildung von Kanälen, u.ä. - in Vorschubrichtung abnimmt.

Zur Erzielung der geforderten Fluiddichtigkeit haben die im Zuge einer Überführung der Injektionsventilanordnung aus der Aufnahmestellung in die Injektionsstellung auftretenden Presskräfte eine plastische Verformung wenigstens des Ventilkörpers zur Folge.

In der Regel wird es ausreichen, dass sich nur der Ventilkörper verformt, das Stellglied aber im Wesentlichen seine Form beibehält. Nach einer nicht von der Erfindung erfassten Variante kann die Verformung grundsätzlich elastisch sein, so dass sie sich wieder rückgängig machen lässt, wenn die Presskräfte wieder abnehmen, beispielsweise im Zuge einer Überführung der Injektionsventilanordnung aus der Injektionsstellung zurück in die Aufnahmestellung. Es sei darauf hingewiesen, dass als Nicht-Einweg-Bauteil ausgebildete Ausführungsvarianten eines Probengebers mit den übrigen Merkmalen des Anspruchs 1 durchaus eine eigenständige Bedeutung haben können, insbesondere als Ersatz für herkömmlicherweise verwendete Injektionsventile, wie sie beispielsweise in der Chromatographie (GC, LC, HPLC) Verwendung finden. Auch Nicht-Einweg-Varianten können im Sinne der weiteren hier beschriebenen optionalem Merkmale weitergebildet sein. Soweit in solchen Nicht-Einweg-Ausführungsvarianten mit Presskräften gearbeitet wird, um die geforderte Fluiddichtigkeit zu erzielen, wird man anstreben, möglichst im elastischen Bereich, also unterhalb der Streckgrenze der verwendeten Materialien oder nur geringfügig darüber, zu bleiben.

Aus Gründen der Kontaminationssicherheit an einem als Einweg-Bauteil ausgebildeten Probengeber ist eine plastische Verformung wenigstens des Ventilkörpers im Zuge einer Überführung aus der Aufnahmestellung in die Injektionsstellung vorgesehen. Als plastische Verformung wird dabei eine sich nicht, oder jedenfalls nicht innerhalb kürzerer Zeit wieder zurückstellende Verformung angesehen. Dies wird typischerweise mit Presskräften einhergehen, die in einem standardisierten Druck-Verformungs-Versuch eine oberhalb der Streckgrenze des jeweiligen Materials liegende Verformung erzeugen.

Um die Lagebeziehung des Stellglieds relativ zum Ventilkörper festzulegen, kann in weiteren Ausführungsformen vorgesehen sein, dass das Stellglied in seinem mit dem Ventilkörper zusammenwirkenden Bereich derart ausgebildet ist, dass eine Rotation des Stellglieds relativ zu dem Ventilkörper um die Vorschubachse unterdrückt, d.h. zumindest erschwert, jedoch insbesondere verhindert, ist. Dies kann durch entsprechende Oberflächengestaltung von jeweils zusammenwirkenden Flächen des Stellglieds und des Ventilkörpers erfolgen. Beispielsweise bieten sich in Vorschubrichtung verlaufende Stege oder Vorsprünge an, die im Sinne einer Keilnutverzahnung zusammenwirken. Auch die Form des Stellglieds in einer orthogonal zu seiner Vorschubrichtung liegenden Fläche kann derart von einer Kreissymmetrie abweichen (z.B. durch Abplattung an wenigstens einer Seite, Form einer Ellipse oder andere geometrische Form), dass nur bestimmte Drehstellungen, insbesondere nur eine einzigen Drehstellung, des Stellglieds gegenüber dem Ventilkörper möglich sind.

Man kann auch eine mit zunehmender Verlagerung in Vorschubrichtung einhergehende vorbestimmte Verdrehung des Stellglieds gegenüber dem Ventilkörper um die Vorschubachse vorsehen, indem das Stellglied in seinem mit dem Ventilkörper zusammenwirkenden Bereich mit Gewindegängen versehen wird. Eine solche Gestaltung erlaubt höhere Presskräfte, bzw. eine bessere Anlage des Stellglieds am Ventilkörper bei kleineren in Vorschubrichtung wirkenden Stellkräften.

Eine entsprechende Oberflächengestaltung einander entsprechender Flächen von Stellglied und/oder Ventilkörper kann auch dazu dienen, bestimmte Positionen von Stellglied und Ventilkörper zueinander festzulegen. Beispielsweise können am Stellglied ausgebildete quer zur Vorschubrichtung vorstehende Vorsprünge oder Vertiefungen dazu dienen, die Aufnahmestellung, Injektionsstellung und ggf. noch weitere Stellungen der Injektionsventilanordnung zu definieren. Solche Vorsprünge bzw. Vertiefungen können als Anschläge oder Verrastungen mit dem Ventilkörper zusammenwirken, wenn die jeweilige Stellung erreicht ist. Man muss eine bestimmte Kraft aufwenden, um das Stellglied über die vorbestimmte Position hinaus zu bewegen, oder ggf. wieder in die Ausgangsrichtung zurück zu bewegen. Alternativ oder zusätzlich kann man die jeweiligen Stellungen der Injektionsventilanordnung auch mit Hilfe einer geeigneten Ansteuerung des Stellantriebs definieren, da der Aufnahmestellung, der Injektionsstellung und ggf. weiteren vorgesehen Stellungen in der Regel eine bestimmte Position in Vorschubrichtung zugeordnet ist.

Gerade zur Ausbildung eines Presssitzes der oben beschriebenen Art sollten in der Regel das Stellglied und der Ventilkörper aus jeweils zueinander passendem Material gefertigt sein. In vielen Fällen wird es günstig sein, das Stellglied aus einem härteren Material herzustellen als den Ventilkörper. Der Ventilkörper kann etwa aus einem geeigneten Kunststoff, beispielsweise Polyetheretherketon (PEEK), hergestellt sein. Auch ein vergleichsweise weiches Metall wie Aluminium (Al) kommt in Frage. Für das Stellglied eignen sich härtere Materialien wie Keramik oder Stahl, insbesondere rostfreier und/oder vergüteter Stahl. Im Falle eines aus relativ weichem Material hergestellten Ventilkörpers kommt auch Aluminium in Frage.

Für Anwendungen, in denen eine Vielzahl von Proben innerhalb möglichst kurzer Zeit zu analysieren sind, kann ein Probengeber der hier beschriebenen Art auch mit einer Mehrzahl von Stellgliedern versehen sein, wobei jedem der Stellglieder eine jeweilige Probenaufnahme zugeordnet ist. Ein derartiger Probengeber kann dabei einen einzigen Ventilkörper aufweisen, der eine Mehrzahl von Hohlräumen bzw. Aufnahmen aufweist, die jeweils mit einem der Stellglieder zusammenwirken. Die jeweiligen Stellglieder werden nacheinander aktiviert und zur Injektion einer jeweiligen Probe für das Analysegerät eingesetzt.

Die oben beschriebene Konstruktion eines Probengebers erlaubt eine ausgezeichnete Abdichtung der zwischen einem jeweiligen Stellglied und dem Ventilkörper gebildeten Fluiddurchgänge. Dies gilt sowohl in der Aufnahmestellung, in der Injektionsstellung als auch in der Vorfüllstellung, sofern vorgesehen. Auch in den bei Überführung zwischen den genannten Stellungen eingenommenen Zwischenstellungen der Injektionsventilanordnung können die einzelnen Fluiddurchgänge gut voneinander abgedichtet sein. Daher kann mehreren der genannten Stellglieder, insbesondere allen Stellgliedern, in einem Probengeber derselbe Eluenteingang und derselbe Ausgang zugeordnet sein. Dies erleichtert den Anschluss an eine Analysevorrichtung beträchtlich. Auch der Betrieb ist denkbar einfach, denn es sind keinerlei zusätzliche Ventile erforderlich, um von Probeninjektion durch eines der Stellglieder auf Probeninjektion durch ein anderes Stellglied umzuschalten. Man muss dazu lediglich das entsprechende nächste Stellglied zunächst in seine Aufnahmestellung bringen, die zu analysierende Probe zugeben, und dann das Stellglied in die Injektionsstellung bringen. Um Kontaminationseffekte möglichst gut zu unterdrücken, empfiehlt es sich, ein jeweiliges Stellglied nach erfolgter Injektion in eine Stellung zu bringen, in der der dem jeweiligen Stellglied zugeordnete Eluentdurchgang bzw. Eluent/Probe-Durchgang fluiddicht gegenüber den den übrigen Stellgliedern zugeordneten Eluentdurchgängen bzw. Eluent/Probe Durchgängen abgedichtet ist. Man kann auch alle Stellglieder unabhängig voneinander in Aufnahmestellung bringen und mit zu analysierender Probe beaufschlagen. Man muss nur sicherstellen, dass jeweils immer nur eines der Stellglieder in Injektionsstellung ist.

Die vorliegenden Erfindung betrifft außerdem eine Analysevorrichtung zur Analyse einer flüssigen oder gasförmigen Probe, die zur Zusammenwirkung mit einem Probengeber der oben beschriebenen Art ausgebildet ist. Eine solche Analysevorrichtung kann insbesondere nach dem Prinzip der Gaschromatographie oder nach dem Prinzip der Flüssigkeitschromatographie, insbesondere der Hochleistungs-Flüssigkeitschromatographie (HPLC) arbeiten. Da bei dem erfindungsgemäßen Probengeber das Injektionsventil bereits in der Form eines Einweg-Bauteils enthalten ist, braucht die Analysevorrichtung nicht über ein eigenes Injektionsventil zu verfügen. Die bislang erforderlichen 6-Port-Ventile oder sogar noch aufwändigere Ventile, entfallen.

Die Erfindung betrifft außerdem ein Analysesystem, umfassend wenigstens einen Probengeber der oben beschriebenen Art sowie wenigstens eine Analysevorrichtung der vorangehend beschriebenen Art.

Die Erfindung wird nachfolgend unter Bezugnahme auf die Zeichnungen näher erläutert. Es zeigt:
Fig. 1A: Eine vereinfachte schematische Darstellung einer ersten Ausführungsform eines erfindungsgemäßen Probengebers, welche die wichtigsten Bauteile vor dem Zusammenbau zeigt;
Fig. 1B: Eine weitere schematische Darstellung des Probengebers aus Fig. 1A in Aufnahmestellung;
Fig. 1C: Eine weitere schematische Darstellung des Probengebers aus Fig. 1A in Injektionsstellung;
Fig. 2A: Eine vereinfachte schematische Darstellung einer zweiten Ausführungsform eines erfindungsgemäßen Probengebers in Aufnahmestellung;
Fig. 2B: Eine weitere schematische Darstellung des Probengebers aus Fig. 2A in einer Zwischenstellung zwischen Aufnahmestellung und Injektionsstellung;
Fig. 2C: Eine weitere schematische Darstellung des Probengebers aus Fig. 2A in Injektionsstellung;
Fig. 3A: Eine vereinfachte schematische Darstellung einer dritten Ausführungsform eines erfindungsgemäßen Probengebers in Vorfülllstellung;
Fig. 3B: Eine weitere schematische Darstellung des Probengebers aus Fig. 3A in Aufnahmestellung;
Fig. 3C: Eine weitere schematische Darstellung des Probengebers aus Fig. 3A in Injektionsstellung; und
Fig. 4: Eine vereinfachte schematische Darstellung einer vierten Ausführungsform eines erfindungsgemäßen Probengebers mit mehreren Stellgliedern.

In allen Figuren sind ungeachtet dessen, ob es sich um dieselbe oder verschiedene Ausführungsformen handelt, gleiche oder gleichartige Bauteile jeweils mit denselben Bezugszeichen bezeichnet. Eine detaillierte Beschreibung der jeweiligen Bauteile erfolgt jeweils nur in Bezug auf die zuerst beschriebene Ausführungsform. Nachfolgende Ausführungsformen werden jeweils immer nur insoweit explizit beschrieben als sie sich von den vorangehenden Ausführungsformen unterscheiden. Derartige Unterschiede sind in den Figuren mit jeweils eigenen Bezugszeichen bezeichnet. Es sei denn anderes ist ausdrücklich vermerkt, gilt für Bauteile nachfolgender Ausführungsformen, die mit zu vorangehenden Ausführungsformen identischen Bezugszeichen bezeichnet sind, jeweils dieselbe Beschreibung wie für die vorangehende(n) Ausführungsform(en). Auf diese Beschreibung wird hiermit zur Vermeidung von Wiederholungen ausdrücklich hingewiesen.

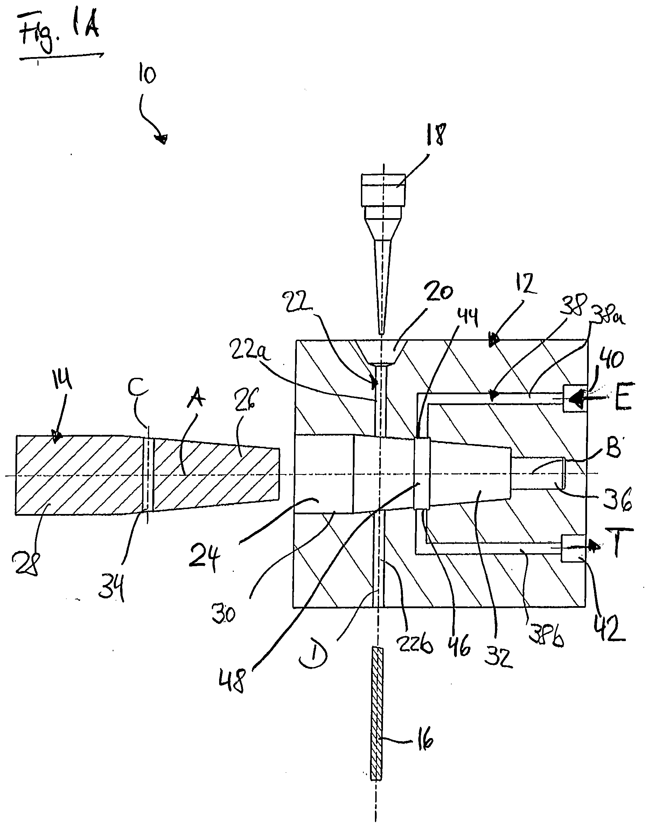

Fig. 1A zeigt eine vereinfachte schematische Darstellung einer ersten Ausführungsform eines erfindungsgemäßen Probengebers 10. Die einzelnen Bauteile sind in Fig. 1A in der Art einer Explosionszeichnung in einem Zustand vor dem endgültigen Zusammenbau gezeigt. Der Probengeber 10 umfasst einen Ventilkörper 12, ein Stellglied 14, sowie einen Stopfen 16. Außerdem ist in Fig. 1A schematisch mit 18 eine Pipettenspitze angedeutet, die in einen mit 20 bezeichneten Pipettensitz einsetzbar ist, der im Ventilkörper 12 ausgebildet ist. Die Pipettenspitze 18 enthält eine zu analysierende Probe, die durch Einsetzen in den Pipettensitz 20 mit dem Probengeber 10 gekoppelt werden kann. Beispielsweise kann durch entsprechende Betätigung der Pipettenspitze 18 darin enthaltene Probensubstanz, in der in Fig. 1A gezeigten Ausführungsvariante in flüssiger Form, in einen in dem Ventilkörper 12 ausgebildeten Probenaufnahmekanal 22 eingebracht werden. Es ist auch denkbar, einen Koppelmechanismus vorzusehen, welcher beim Einsetzen der Pipettenspitze 18 in den Pipettensitz 20 die zu analysierende Substanz aus der Pipettenspitze 18 in den Probenaufnahmekanal 22 überführt.

Der Probenaufnahmekanal 22 durchquert den Ventilkörper 12 von einer seiner Seiten, in der der Pipettensitz 20 ausgebildet ist, zu der gegenüberliegenden Seite, wo er in einer Öffnung der Seitenfläche mündet. Der Probenaufnahmekanal 22 weist eine Längsachse D auf, die in bei dem in Fig. 1a gezeigten Ausführungsbeispiel von dem auf der Oberseite angeordneten Pipettensitz 20 vertikal nach unten verläuft. Der Probenaufnahmekanal 22 durchquert einen im Wesentlichen orthogonal verlaufenden Hohlraum 24, der den Probenaufnahmekanal 22 in einen erste, oben liegenden Teil 22a und einen zweiten, unteren Teil 22b trennt.

Der Verschlussstopfen 16 dient zum Verschließen des Probenaufnahmekanals 22 von seinem dem Pipettensitz 22 gegenüberliegenden Ende her. Dieses Ende liegt in Fig. 1A, und in der Regel auch im Betrieb, unten, so dass die zu analysierende Substanz sich unter Schwerkraftwirkung vom Pipettensitz 20 den Hohlraum 24 durchquerend zum Verschlussstopfen 16 hin bewegt. Der Verschlussstopfen 16 wird in den zweiten Bereich 22b des Probenaufnahmekanals 22 eingeführt und verschließt diesen fluiddicht. Wie noch gezeigt wird, kann durch Bewegen des Verschlussstopfens 16 in Richtung der Achse D des Probenaufnahmekanals 22 das Volumens des Probenaufnahmekanals 22 vergrößert oder verkleinert werden.

Das Stellglied 14 weist einen Querschnitt auf, der um eine Längsachse A, die mit einer Vorschubachse des mit dem Ventilkörper 12 zusammenwirkenden Stellglieds 14 zusammenfällt, herum kreisförmig ist. Wie in dem die Achse A enthaltenden Schnitt der Fig. 1A gezeigt ist, weist das Stellglied 14 einen konisch bzw. in der Form eines Kegelstumpfs ausgebildeten Vorderabschnitt 26 sowie einen im Wesentlichen zylindrischen Hinterabschnitt 28 auf. Der konische Vorderabschnitt 26 ist in einem geringen Winkel zwischen 0 und 10 Grad zur Achse A geneigt.

Dem Stellglied 14 ist der in dem Ventilkörper 12 ausgebildete Hohlraum 24 zugeordnet. Der Hohlraum 24 weist eine zu der Form des Stellglieds 14 komplemtäre Form auf, d.h. er besitzt einen im Wesentlichen zylindrischen Randbereich 30, der in eine kreisförmige Öffnung in der Seitenwand des Ventilkörpers 12 mündet. An den zylindrischen Randbereich 30 schließt sich nach innen ein kegelstumpfförmig ausgebildeter Innenbereich 32 an. Auch der kegelstumpfförmig ausgebildete Innenbereich ist gegenüber einer Zentralachse B des Hohlraums 24 in einem Winkel zwischen 0 bis 10 Grad geneigt, insbesondere im gleichen Winkel wie beim kegelstumpfförmigen Vorderabschnitt 26 des Stellglieds 14. Die Zentralachse B definiert die Vorschubachse des mit dem Ventilkörper 12 zusammenwirkenden Stellglieds 14. Der innerste Bereich 36 des Hohlraums 24 ist von der konisch sich verjüngenden Form des Innenbereichs 32 nochmals zur Achse hin zurückgesetzt und bildet einen im Wesentlichen zylindrischen Hohlraum mit kleinerem Durchmesser als der Durchmesser der kleineren Basisfläche des Kegelstumpfs.

Im Stellglied 14 ist im Vorderabschnitt 26, axial kurz hinter der Basis des konischen Vorderbereich 26 ein quer, insbesondere orthogonal, zur Achse A verlaufender Kanal 34 ausgebildet. Die Achse C des Kanals 34 steht orthogonal zur Achse A des Stellglieds. Der Kanal 34 durchquert den konischen Vorderbereich 26 des Stellglieds 14 von einer Mantelfläche durch die Achse A bis zur gegenüberliegenden Mantelfläche, so dass die Längsachse C des Kanals die Achse A des Stellglieds schneidet. Das von diesem Kanal 34 eingenommene Volumen ist daher durch die Geometrie des Stellglieds 14 vorgegeben und lässt sich sehr genau bestimmen. Wie später noch ausführlich erläutert werden wird, bildet der Kanal 34 einen Dosierraum des Probengebers 10, mittels welchem ein sehr genau einstellbares Volumen einer zu analysierenden Substanz der Analysevorrichtung zugeführt werden kann.

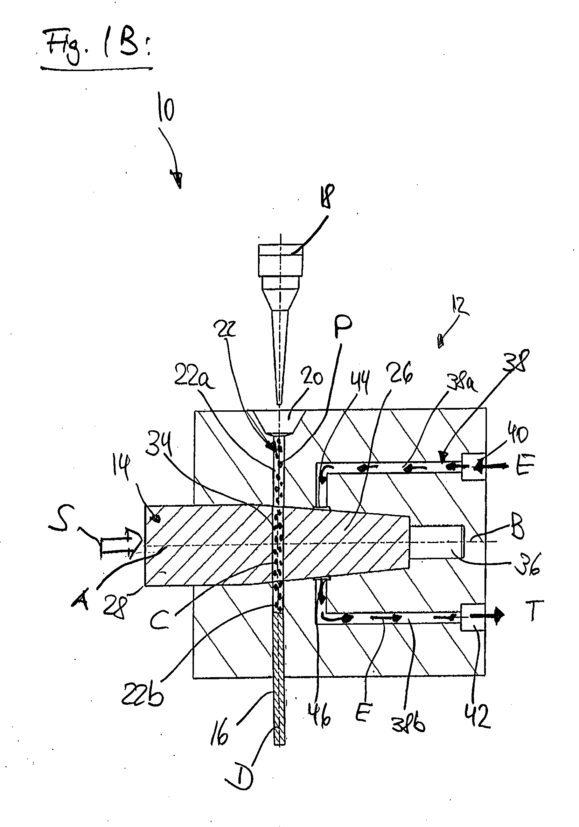

Zumindest dann, wenn sich das Stellglied 14 in einer Aufnahmestellung befindet, wie das in Fig. 1B gezeigt ist, fallen die Achsen C und D des im Stellglied 14 ausgebildeten Querkanals 34 und des Probenaufnahmekanals 22 zusammen und verlaufen insbesondere vertikal.

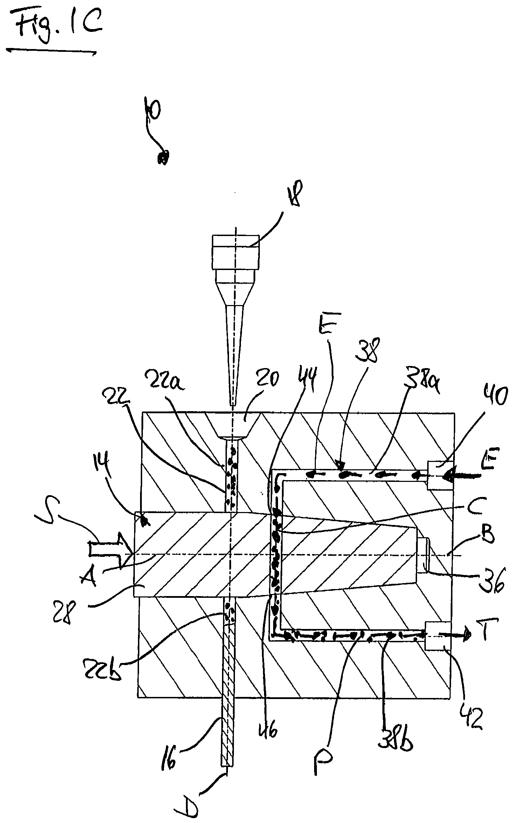

Im Ventilkörper 12 ist außerdem ein Strömungskanal 38 ausgebildet, der zwischen zwei an der zu der Mündung des dem Stellglied 14 zugeordneten Hohlraums 24 gegenüber liegenden Öffnungen 40, 42 verläuft. Die erste Mündung 40 ist mit einem Eluentreservoir (nicht gezeigt) verbunden und bildet einen Eluenteingang, aus dem ein Eluent E dem Probengeber 10 zuströmt. Der Begriff Eluent soll hier allgemein verwendet werden, um eine der Analysevorrichtung zuzuführende mobile Phase (der ggf. während der Injektion noch die als Probe P bezeichnete zu analysierende Substanz hinzugefügt wird), insbesondere eine flüssig oder gasförmige Phase, zu beschreiben. Im Falle einer Chromatograpievorrichtung umströmt die mobile Phase eine stationäre Phase, die im Folgenden auch als Trennsäule bezeichnet wird. Die zweite Mündung 42 ist mit der Analysevorrichtung T, insbesondere der Trennsäule einer Gaschromatographie (GC)-, Flüssigkeitschromatographie (LC)- oder Hochleistungsflüssigkeitschromotographie (HPLC)-Vorrichtung, verbunden. Die zweite Mündung 42 bildet damit einen Ausgang, durch den ein aus der ersten Mündung 40 stammender Eluentstrom (siehe Pfeil bei E in Fig. 1A) oder ein mit der zu analysierenden Probe versetzter Eluentstrom zur Analysevorrichtung geliefert werden kann. Der Strömungskanal 38 gehört damit - je nach Stellung des Stellglieds 14 im Hohlraum 24 des Ventilkörpers 12 zu einem Eluentdurchgang (in Aufnahmestellung, siehe Fig. 1B) oder einem Probe/Eluent-Durchgang (in Injektionsstellung, siehe Fig. 1C).

Der den Eluenteingang 40 und den Ausgang 42 verbindende Strömungskanal 38 durchquert ebenfalls den Hohlraum 24, allerdings an einer Stelle in Richtung der Vorschubachse B weiter innen als der Probenaufnahmekanal 22. Im Bereich zwischen den Mündungen 44, 46 des Strömungskanals 38 in den Hohlraum 24 ist die Innenwand des Hohlraums 24 mit einer die beiden Mündungen 44, 46 verbindenden Ringnut 48 ausgebildet. Anstelle einer vollständig umlaufenden Ringnut 48 wäre es auch ausreichend, eine nur in etwa halbkreisförmige Nut vorzusehen, die die beiden Mündungen 44, 46 auf einer Seite des Hohlraums 24 verbindet.

Die Funktionsweise des Probengebers 10 soll anhand der Fig. 1B und 1C näher erläutert werden. Fig. 1B zeigt eine weitere schematische Darstellung des Probengebers 10 aus Fig. 1A in Aufnahmestellung. Aufnahmestellung bedeutet, dass der Probengeber in dieser Stellung zur Aufnahme einer Probe, d.h. einer zu analysierenden Substanz bereit ist, bzw. wie in Fig. 1B angedeutet, bereits mit der Probe gefüllt ist. Die Probe kann durch ein geeignet ausgebildetes Probennahme- und aufbereitungssystem zugeführt werden, etwa mittels einer in Fig. 1B angedeuteten Pipettenspitze 18. In Aufnahmestellung ist das Stellglied 14 in den Hohlraum 24 eingeführt und so weit nach innen gefahren, dass der Querkanal 34 des Stellglieds 14 mit dem Probenaufnahmekanal 22 des Ventilkörpers 12 fluchtet. Der untere Teil 22b des Probenaufnahmekanals 22 ist durch den Stopfen 16 verschlossen. Damit bilden der Querkanal 34 und der Probenaufnahmekanal 22 gemeinsam eine Probenaufnahme, in welcher die von der Pipettenspitze 18 abgegebene Probe gesammelt ist (in Fig. 1 durch Punkte angedeutet und mit P bezeichnet). Der Pegel des in der Probenaufnahme gesammelten Fluids liegt dabei höher als die obere Begrenzung des Querkanals 34. Damit bildet der Querkanal 34 einen Dosierraum mit genau definiertem Volumen aus, wie noch ausgeführt wird.

Die Geometrie von Stellglied 14 und Hohlraum 24 sind zueinander komplemtär ausgebildet und das Stellglied 14 ist in der Aufnahmestellung so weit in den Hohlraum 24 eingeschoben, dass der Übergang zwischen zylindrischem Abschnitt 28 und konischem Abschnittt 26 des Stellglieds 14 mit dem Übergang zwischen zylindrischem Bereich 30 und konischem Bereich 32 des Hohlraums 24 zusammenfällt oder das Stellglied 14 geringfügig weiter nach innen geschoben ist. Daher liegt die im Abschnitt 26 konisch verlaufende Außenwand des Stellglieds 14 fluiddicht an der im inneren Bereich 32 der konisch verlaufenden Innenwand des Hohlraums 24 an. Um die Probenaufnahme, insbesondere die Bereiche wo der obere Probenaufnahmekanalabschnitt 22a bzw. untere Probenaufnahmekanalabschnitt 22b in den Dosierraum 34 münden, herum ist dadurch zwischen Stellglied 14 und Ventilkörper 12 ein fluiddichter Bereich gebildet, der die Probenaufnahme gegenüber Ventilkörper 12 und Stellglied 14 abschließt.

Auch im Bereich des die beiden Mündungen 40 (Eluenteingang) und 42 (Eluentausgang) verbindenden Strömungskanals 38 liegt die Außenwand des Stellglieds 14 fluiddicht an der Innenwand des Hohlraums 24 an. Allerdings kann Eluent E zwischen den beiden Mündungen 44, 46 durch die in der Innenwand des Hohlraums 24 ausgebildete Nut 48 um das Stellglied 14 herum strömen, so dass der durch den Strömungskanal 38 und die Nut 48 gebildete Eluentdurchgang in dieser Stellung freigehalten bleibt. In Fig. 1B ist die Eluentströmung durch mit E bezeichnete Pfeile angedeutet.

Der Eluentdurchgang 38, 48 ist allerdings durch fluiddichte Anlage des Stellglieds 14 am Ventilkörper 12 in dem Bereich zwischen Eluentdurchgang 38, 48 und Probenaufnahme 22, 34 fluiddicht von der Probe getrennt.

Die Bewegung des Stellglied 14 in Vorschubrichtung kann durch eine in Fig. 1B mit S bezeichnet Stellvorrichtung, beispielsweise einen elektrischen Servoantrieb, erfolgen.

Fig. 1C zeigt den Probengeber 10 aus Fig. 1A und 1B in Injektionsstellung, in der das Stellglied 14 mit Hilfe des Stellantriebs S noch weiter gegenüber dem Ventilkörper 12 in das Innere des Hohlraums 24 gedrückt ist. Man erkennt, dass in der Injektionsstellung nunmehr der den Dosierraum bildende Querkanal 34 im Stellglied 14 mit den beiden inneren Mündungen 44, 46 des Strömungskanals 38 fluchtet. Damit hat sich ein Probe/Eluent-Durchgang gebildet, denn das aus dem oberen Teil 38a des Strömungskanals 38 kommende Eluent E (angedeutet durch Pfeile in Fig. 1B und 1C) vermischt sich mit Eintritt in den Dosierraum 34 mit der darin befindlichen Probe (angedeutet durch Punkte in Fig. 1B und 1C), so dass im unteren Teil 38b des Strömungskanals 38 schließlich ein Gemisch aus mit Probe versetztem Eluent E strömt, das schließlich über den Ausgang 42 zur Analysevorrichtung T geliefert wird.

Beim Vortrieb des Stellglieds 14 in den Hohlraum 24 aus der Aufnahmestellung (Fig. 1B) in die Injektionsstellung (Fig. 1C) kommt es zu einer Verformung, insbesondere einer plastischen Verformung, wenigstens des den Hohlraum 24 umgebenden Materials des Ventilkörpers 12. Dies lässt sich anhand des deutlich geschrumpften innersten zylindrischen Teils 36 des Hohlraums 24 in Fig. 1C deutlich erkennen. Die Verformung ist auf die vom Stellglied 14 ausgeübten Presskräfte zurückzuführen und bewirkt eine sehr enge Anlage zwischen Stellglied 14 und Ventilkörper 12 in dem den Probe-Eluent Durchgang 38a, 34, 38b umgebenden Bereich. Diese enge Anlage sorgt für ausgezeichnete Fluiddichtigkeit, so dass im Probe-Eluent-Durchgang geführtes Fluid nicht entweichen kann. Dadurch werden quantitative Analysen mit ausgesprochen hoher Genauigkeit möglich, weil das zur Analysevorrichtung T geführte Probenvolumen sehr genau dem Dosiervolumen 34 vor dem Umschalten in die Injektionsstellung entspricht.

Um eine Veränderung des Dosiervolumens 34 beim Überführen aus der Aufnahmestellung in die Injektionsstellung möglichst zu unterdrücken, ist es empfehlenswert, das Stellglied 14 aus einem deutlich härteren Material herzustellen als den Ventilkörper 12. Beispielsweise kann das Stellglied 14 aus Keramik hergestellt sein, während sich für den Ventilkörper 12 vor allem Kunststoffe anbieten, etwa PEEK (Polyetheretherketon). Auch Paarungen auch aus vergleichsweise hartem Metall (z.B. nicht rostender Stahl) bzw. Keramik für das Stellglied bzw. weichem Metall (z.B. Aluminium) oder weichem Kunststoff für den Ventilkörper 12 kommen in Frage.

Die mit Bezug zu Fig. 1A ausführlich beschriebene und in Fig. 1B noch zu sehende Nut 48, die die beiden Mündungen 44, 46 des Strömungskanals miteinander verbindet, ist in der Injektionsstellung gemäß Fig. 1C beinahe vollständig verschwunden. Dies ist auf das starke Fließen von Material des Ventilkörpers 12 unter der vom Stellglied 14 ausgeübten Pressung beim Umschalten zwischen Aufnahmestellung und Injektionsstellung zurückzuführen, mit der Folge, dass die Nut 48 praktisch vollständig mit Material des Ventilkörpers 12 aufgefüllt wurde. In Injektionsstellung gelangen so die Mündungen 44, 46, die nicht verschlossen werden, mit dem Dosierraum 34 in Fluidverbindung, jedoch existiert die Nut 48 praktisch nicht mehr, so dass das im oberen Strömungskanalabschnitt 38a strömende Eluent vollständig durch den Dosierraum 34 strömt und sich dort mit Probe P vermischt.

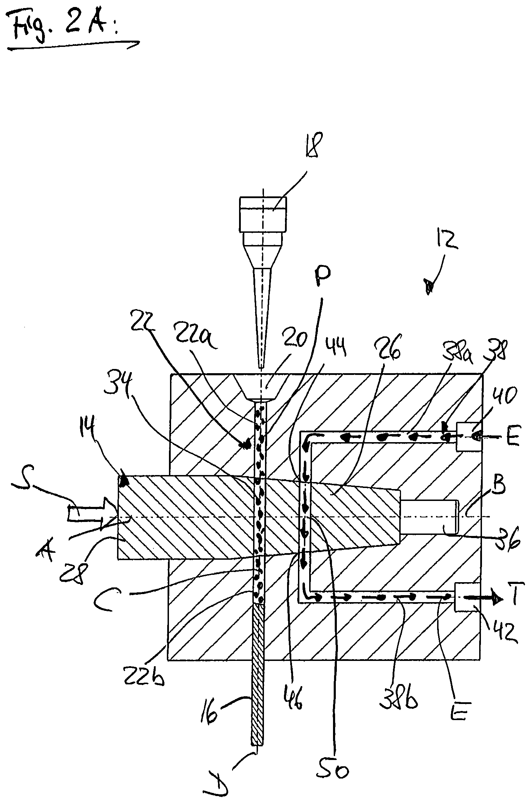

Fig. 2A zeigt eine vereinfachte schematische Darstellung einer zweiten Ausführungsform eines erfindungsgemäßen Probengebers 10 in Aufnahmestellung. Wie bereits erwähnt, werden lediglich die Unterschiede zu der Ausführungsform gemäß Fig. 1A bis 1C beschrieben und hinsichtlich der restlichen Details auf die entsprechende Ausführungsform der Fig. 1A bis 1C verwiesen. Die Ausführungsform gemäß Fig. 2A bis 2C unterscheidet sich von der Ausführungsform gemäß Fig. 1A bis 1C lediglich dadurch, dass der Eluentstrom in Aufnahmestellung (Fig. 2A) zwischen der Mündung 44 des oberen Strömungskanalabschnitts 38a in den Hohlraum 24 und der Mündung 46 des unteren Strömungskanalabschnitts 38b in den Hohlraum 24 durch einen weiteren im Stellglied 14 ausgebildeten Querkanal 50 verläuft. Der Querkanal 50 fluchtet in Aufnahmestellung mit den Mündungen 44, 46, so dass der Eluentdurchgang gebildet wird durch den oberen Strömungskanalabschnitt 38a des Ventilkörpers 12, den weiteren Querkanal 50 des Stellglieds und den unteren Strömungskanalabschnitt 38b des Ventilkörpers 12. Die Ausführungsform gemäß Fig. 2A bis 2C erfordert damit zwar das Ausbilden von zwei, parallel zueinander verlaufenden Querkanälen 34, 50 im Stellglied 14, hat aber den Vorteil, dass beim Umschalten von Aufnahmestellung zu Injektionsstellung geringere Presskräfte erforderlich sind, weil nicht wie in der Ausführungsform gemäß Fig. 1A bis 1C eine in Umfangsrichtung umlaufende Nut 48 durch Fließen von Material des Ventilkörpers 12 aufgefüllt werden muss. Es reicht vielmehr eine fluiddichte Anlage der konisch zulaufenden Außenwand des Stellglieds 14 an der Innenwand des Hohlraums 24 aus. Dementsprechend kann ein nur sehr geringer Konuswinkel ausreichen, um die geforederte Fluiddichtigkeit zu erreichen, in manchen Fällen mag gar ein vollständig zylindrisches Stellglied 14 in Zusammenwirkung mit einem nur geringfügig konisch zulaufenden Hohlraums 24 oder gar einem zylindrischen Hohlraum 24 ausreichende Fluiddichtigkeit gewährleisten.

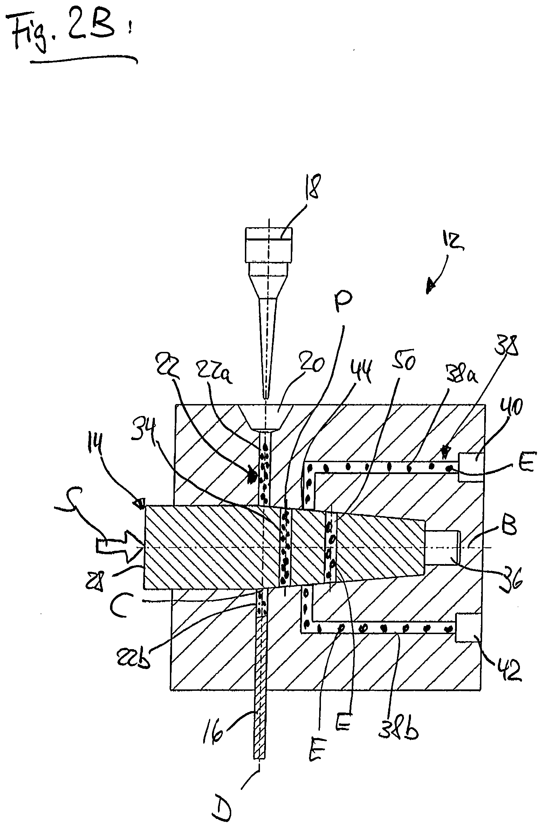

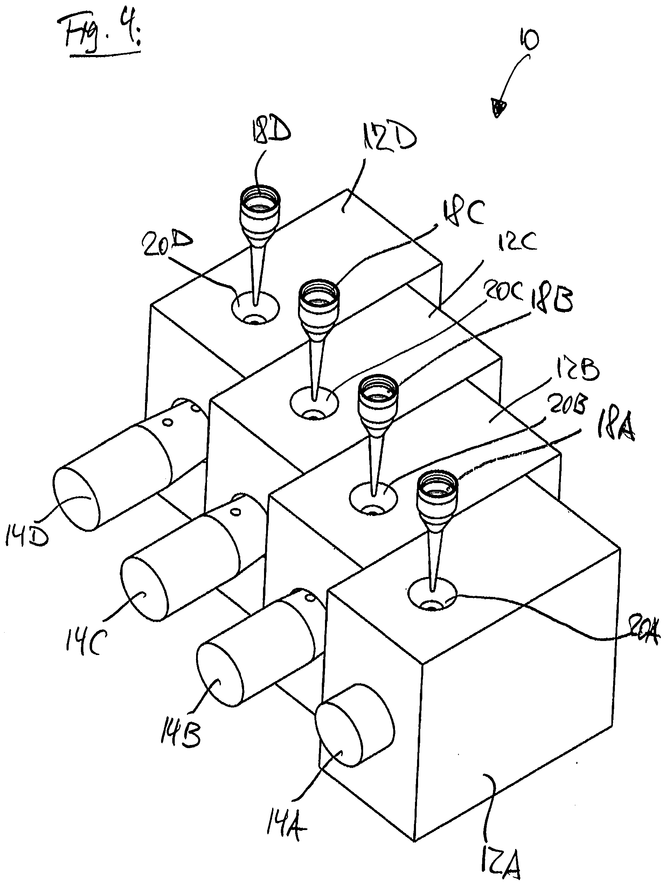

Fig. 2B zeigt für die zweite Ausführungsform eine Zwischenstellung der Injektionsventilanordnung zwischen Aufnahmestellung und Injektionsstellung. Diese Zwischenstellung wird beim Überführen der Injektionsventilanordnung von der Aufnahmestellung in die Injektionsstellung eingenommen. In vielen Fällen wird eine solche Zwischenstellung nur als transienter Zustand eingenommen werden. Es gibt aber auch Anwendungen, insbesondere solche, bei denen einem einzigen Ventilkörper 12 eine Mehrzahl von Stellgliedern 14 zugeordnet sind (siehe etwa Fig. 4A, 4B), wo gezieltes Anfahren einer solchen Zwischenstellung und Verbleiben der jeweiligen Injektionsventilanordnung in der Zwischenstellung vorgesehen sind.

Man erkennt in Fig. 2B, dass in der gezeigten Zwischenstellung sowohl der den Dosierraum bildende erste Querkanal 34 als auch der weitere Querkanal 50 des Stellglieds 14 an jeweiligen Bereichen der konisch zulaufenden Innenwand des Hohlraums 24 anliegen. Die durch den Stellantrieb S ausgeübte Stellkraft ist dabei so gewählt, dass sowohl der Probe P enthaltende Dosierraum 34 als auch der den Eluent E enthaltende weitere Querkanal 50 an ihren beiden offenen Enden fluiddicht durch die Innenwand des Hohlraums 24 verschlossen sind. Damit ist die Injektionsventilanordnung in der In Fig. 2B gezeigten Zwischenstellung vollständig inaktiv. Es kann weder Probe aus dem Dosierraum 34 noch Eluent aus dem weiteren Querkanal 50 austreten. Auch die Strömung von Eleunt E zwischen Eluenteingang 40 und Eluentausgang 42 ist in dieser Zwischenstellung unterbrochen. Dies würde allerdings für den Fall mehrerer Injektionsventilanordnungen nicht gelten, solange wenigstens eine dieser Injektionsventilanordnungen einen freien Eluentdurchgang aufweist.

Es sei ausdrücklich darauf hingewiesen, dass eine Zwischenstellung wie in Fig. 2B gezeigt nicht nur die Ausführungsform gemäß Fig. 2A bis 2C vorgesehen sein kann, sondern ohne Weiteres auch für die anderen Ausführungsformen. Sie macht als dauerhaft angefahrene Stellung gerade dann Sinn, wenn wie bei der Ausführungform gemäß Fig. 4A/4B mehrere Stellglieder 14 in einer gemeinsamen Injektionsventilanordnung vorgesehen sind. Will man eine Unterbrechung der Eluentströmung in der Zwischenstellung unterdrücken, kann man beispielsweise zusätzlich oder alternativ zum Durchgang 50 eine in der den Hohlraum 24 umgebenden Innenwand des Ventilkörpers 12 ausgebildete Nut 48, wie in Fig. 1A - 1C gezeigt, vorsehen.

Es kann sogar vorteilhaft sein, eine weitere Zwischenstellung vorzusehen, die ebenso wie die in Fig. 2B gezeigte Zwischenstellung bewirkt, dass die Fluidverbindung zwischen Eingang 40 und Ausgang 42 unterbrochen ist, bei der allerdings das Stellglied 14 in Vorschubrichtung noch über die Injektionsstellung hinaus in den Hohlraum 24 eingeschoben ist. Die Fluiddichtigkeit einer solchen weiteren Zwischenstellung ist in vielen Fällen besser als bei Verlagerung des Stellglieds 14 nach rückwärts entgegen der Vorschubrichtung, insbesondere dann wenn beim Einschieben des Stellglieds 14 in Vorschubrichtung irreversible Effekte, beispielsweise plastische Verformungen des Ventilkörpers 12, auftreten.

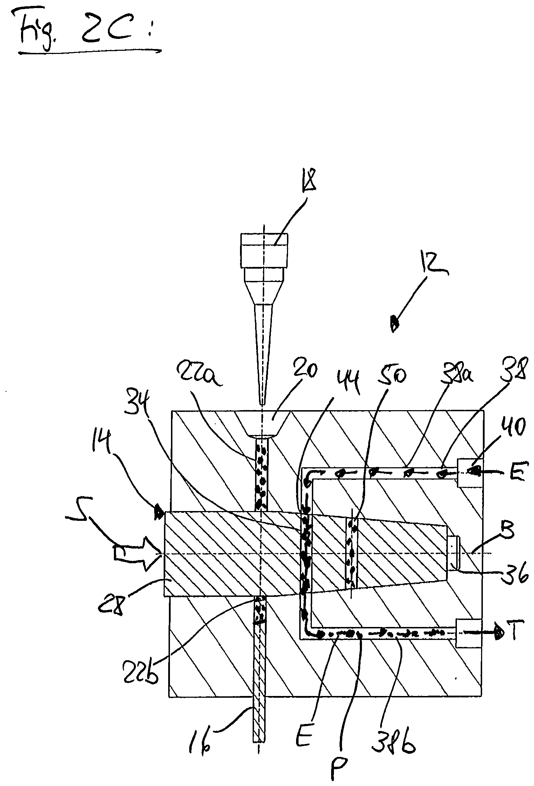

Fig. 2C zeigt eine schematische Darstellung des Probengebers aus Fig. 2A in Injektionsstellung. Diese entspricht weitgehend der in Fig. 1C gezeigten Situation. Der die Probe P enthaltende Dosierraum 34 mündet an seinen beiden offenen Enden in den Strömungskanal 38, so dass der Strömungskanal 38 sowie der Dosierraum 34 zusammen den Probe/Eluent-Durchgang bilden. Der weitere Querkanal 50 liegt mit seinen beiden offenen Enden fluiddicht an der Innenwand des Hohlraums 24 an.

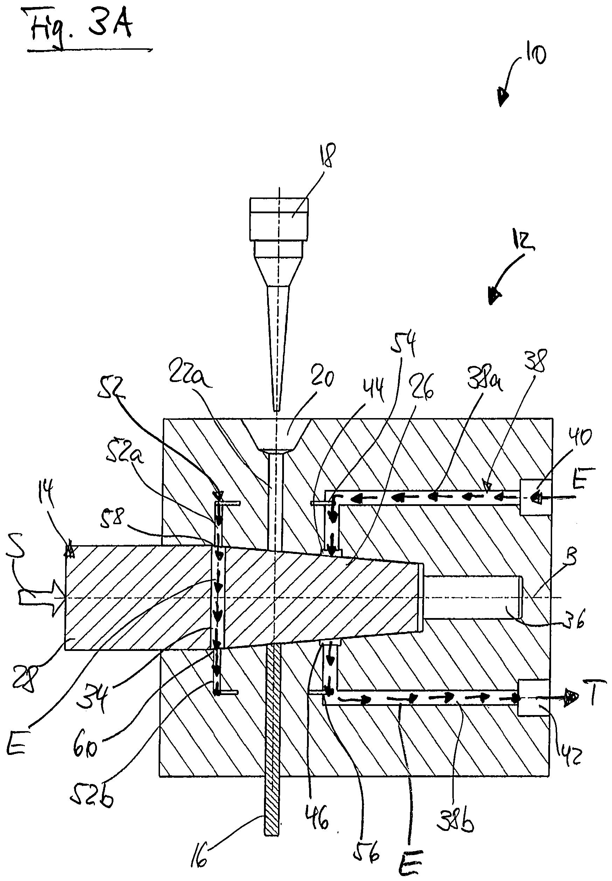

Fig. 3A zeigt eine vereinfachte schematische Darstellung einer weiteren Ausführungsform eines erfindungsgemäßen Probengebers 10. Der Probengeber 10 gemäß dieser Ausführungsform ist dazu in der Lage, nur in einem Teilvolumen seines Dosierraums 34 eine zu analysierende Probe aufzunehmen, wobei dennoch die Menge der Probe quantitativ bestimmbar bleibt. Dazu kann in die Injektionsventilanordnung in eine zusätzliche Vorfüllstellung gebracht werden. Fig. 3A zeigt eine vereinfachte schematische Darstellung des Probengebers 10 in Vorfülllstellung.

Bei der Ausführungsform gemäß Fig. 3A bis 3C weist der Ventilkörper 12 einen von dem Strömungskanal 38 abzweigenden Vorfüllkanal 52 auf. Der Vorfüllkanal quert ebenfalls den im Ventilkörper 12 ausgebildeten Hohlraum 24, der den Vorfüllkanal 52 in einen oberen Vorfüllkanalabschnitt 52a und einen unteren Vorfüllkanalabschnitt 52b teilt. Der obere Vorfüllkanalabschnitt 52a zweigt an einer Stelle stromaufwärts der Mündung 44 des oberen Strömungskanalabschnitts 38a in den Hohlraum 24 von dem Strömungskanalabschnitt 38a ab, der untere Vorfüllkanalabschnitt 52b mündet an einer Stelle stromabwärts der Mündung 46 des unteren Strömungskanalabschnitts 38b in den Hohlraum 24 in den Strömungskanalabschnitt 38b. Der obere Vorfüllkanalabschnitt 52a umgibt den oberen Probenaufnahmekanalabschnitt 22a ringförmig. Der untere Vorfüllkanalabschnitt 52b umgibt den unteren Probenaufnahmekanalabschnitt 22b ringförmig. Auch in diesem Falle würde es auch ausreichen, wenn der obere und untere Vorfüllkanalabschnitt 52a, 52b in etwa halbbogenförmig ausgebildet sind und den oberen bzw. unteren Probenaufnahmekanalabschnitt 22a, 22b nur auf einer Seite passieren.

In der in Fig. 3A gezeigten Vorfüllstellung befindet sich das Stellglied 14 in einer solchen Stellung, dass der obere Vorfüllkanalabschnitt 52a mit seinem in den Hohlraum 24 mündenden Ende 58 mit dem einen (oberen) Ende des den Dosierraum 34 bildenden Querkanals des Stellglieds 14 fluchtet und dieser Querkanal mit seinem gegenüber liegenden (unteren) Ende wiederum in das in den Hohlraum 24 mündende Ende 60 des unteren Vorfüllkanalabschnitts 52b mündet. Damit ergibt sich in der Vorfüllstellung ein Eluentdurchgang, der gebildet wird durch die beiden Strömungskanalabschnitte 38a, 38b samt dem zwischen Stellglied 14 und in der Innenwand des Hohlraums 24 ausgebildeter Ringnut 48 verlaufenden Kanal (wie auch in der in Fig. 1 gezeigten Ausführungsform) sowie durch die beiden Vorfüllkanalabschnitte 52a, 52b samt dem im Stellglied 14 ausgebildetem Querkanal, der den Dosierraum 34 bildet.

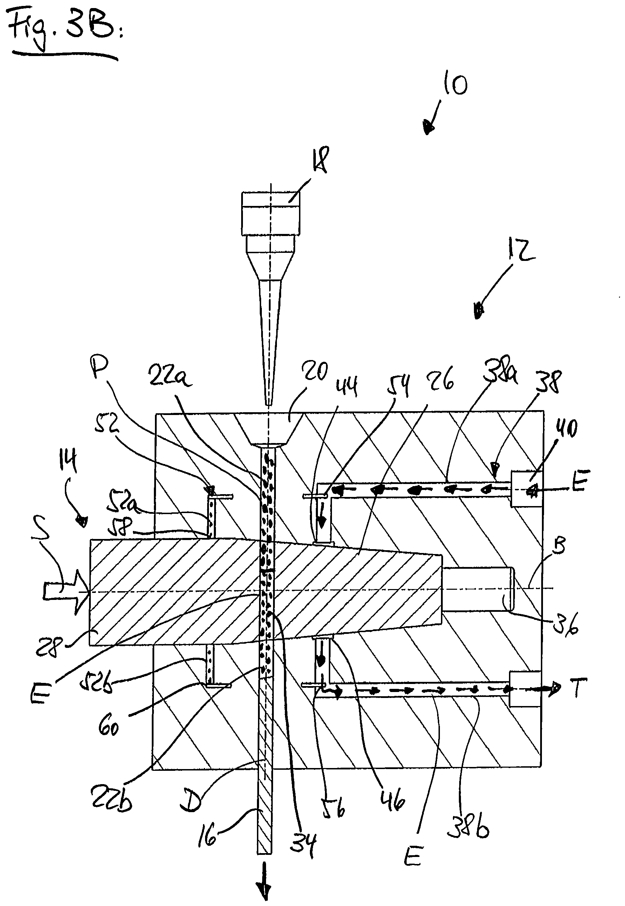

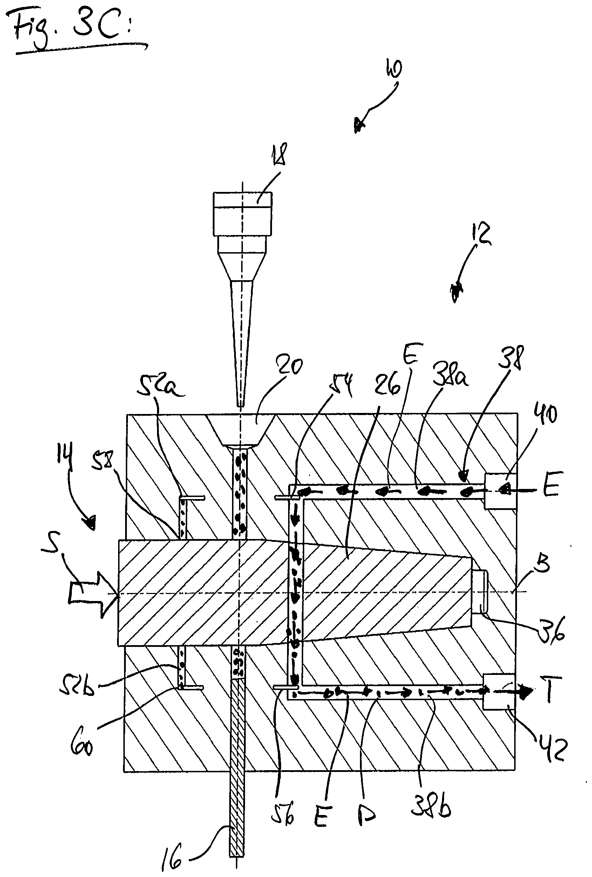

Verstellt man die Injektionsventilanordnung in die in Fig. 3B gezeigte Aufnahmestellung, so mündet nunmehr der den Dosierraum 34 bildende Querkanal des Stellglieds 14 in den oberen und unteren Probenaufnahmekanalabschnitt 22a, 22b, wie in den bisher diskutierten Ausführungsformen. Allerdings ist bei der Ausführungsform gemäß Fig. 3A bis 3C der Dosierraum 34 in dieser Stellung vollständig mit Eluent E gefüllt. Deshalb wird das Volumen der durch den Dosierraum 34, den oberen Probenaufnahmekanalabschnitt 22a und den unteren Probenaufnahmekanalabschnitt 22b gebildete Probenaufnahme durch Herausziehen des Verschlussstopfens 16 vergrößert. In Fig. 3B bewegt sich der Verschlussstopfen 16 beim Herausziehen entlang der Achse D ein Stück nach unten, wie das durch den nach unten zeigenden Pfeil angedeutet ist. Die Vergrößerung des Volumens der Probenaufnahme lässt sich anhand der Verschiebung des Verschlussstopfens 16 ohne Weiteres ermitteln. Da im Dosierraum befindlicher Eluent E in den durch Zurückziehen des Stopfens 16 frei werdenden Raum nachströmt, hat der Dosierraum 34 hat dann ein zur Aufnahme der Probe P zur Verfügung stehendes Volumen, das dieser Zunahme entspricht. Es wird nun über den Pipettensitz 20 wiederum Probe in den Dosierraum 34 gegeben (wobei der Dosierraum 34 wiederum überfüllt wird) und dann die Injektionsventilanordnung in die in Fig. 3C gezeigte Injektionsstellung verfahren. Dies erfolgt in genau derselben Weise wie bei der in Fig. 1A bis 1C gezeigten Ausführungsform, mit dem Unterschied, dass nun in dem Dosierraum ein Gemisch aus zu analysierender Probe P und Eluent E befindet, das sich mit dem im Strömungskanal 38 strömenden Eluent vermischt.

Fig. 4 zeigt eine vereinfachte schematische Darstellung einer vierten Ausführungsform eines erfindungsgemäßen Probengebers 10. Wie bereits erwähnt, werden lediglich die Unterschiede zu den vorher beschriebenen Ausführungsformen beschrieben und hinsichtlich der restlichen Details auf die entsprechenden obigen Ausführungsformen verwiesen. Der in Fig. 4 gezeigte Probengeber 10 weist mehrere Stellglieder 14A, 14B, 14C, 14D auf. Jedes der Stellglieder 14A, 14B, 14C, 14D ist einer jeweiligen Injektionsventilanordnung zugeordnet. jede Injektionsventilanordnung weist zudem einen Ventilkörper 12A, 12B, 12C, 12D und einen Ventilsitz 20A, 20B, 20C, 20D auf. Jedem Ventilsitz 20A, 20B, 20C, 20D ist eine Pipettenspitze 18A, 18B, 18C, 18C zugeordnet. Die Injektionsventilanordnungen gemäß Fig. 4 können gemäß jeder der oben beschriebenen Ausführungsformen aufgebaut sein. Bei der in Fig. 4 gezeigten Situation befindet sich das Stellglied 14A des ersten Injektionsventils in Aufnahmestellung und die anderen Stellglieder 14B, 14C, 14D befinden sich noch in einem Zustand vor dem Einführen in den jeweils zugeordneten Hohlraum des Ventilkörpers 12B, 12C, 12D.

Bei der in Fig. 4 gezeigten Konfiguration weist jede Injektionsventilanordnung einen eigenen Ventilkörper 12A, 12B, 12C, 12D auf, d.h. jedem Stellglied 14A, 14B, 14C,14B ist ein eigener Ventilkörper 12A, 12B, 12C, 12D zugeordnet. Dennoch sind alle Injektionsventilanordnungen in dem Sinne vereint, dass insgesamt nur ein einziger Eingang für Eluent und ein einziger Ausgang zur Analysevorrichtung vorgesehen ist. Es wäre auch möglich, allen Stellgliedern 14A, 14B, 14C, 14D nur einen einzigen gemeinsamen Ventilkörper 12 zuzuordnen. Es versteht sich, dass in dieser Weise beliebig viele Injektionsventilanordnungen bzw. Stellglieder vorgesehen sein können. In diesem Falle ist es zweckmäßig, wenn die einzelnen Injektionsventilanordnungen bzw. Stellglieder nach erfolgter Injektion dauerhaft eine Zwischenstellung anfahren können, wie in Fig. 2B gezeigt, weil auf diese Weise Kreuzkontaminationseffekte effektiv unterdrückt werden können. Diese Zwischenstellung kann auch durch noch weitere Verlagerung des jeweiligen Stellglieds 14A, 14B, 14C, 14D in Vorschubrichtung über die Injektionsstellung hinaus angefahren werden, wie das oben mit Bezug zu Fig. 2B schon angesprochen worden ist.

## Patentansprüche

1. Probengeber (10) für eine Analysevorrichtung, insbesondere für eine nach dem Prinzip der Flüssigkeitschromatographie (LC), insbesondere der Hochdruckflüssigkeitschromatographie (HPLC), oder der Gaschromatographie (GC) arbeitende Analysevorrichtung, umfassend
eine Probenaufnahme (22, 34) zur Aufnahme einer zu analysierenden Probe,
einen Eingang (40), durch den ein Eluent zuführbar ist,
einen Ausgang (42), und
eine Injektionsventilanordnung, welche wenigstens von einer Aufnahmestellung zu einer Injektionsstellung umschaltbar ist,
wobei zumindest in der Aufnahmestellung und in der Injektionsstellung der Eingang (40) in Fluidverbindung mit dem Ausgang (42) steht, um den - ggf. mit der Probe versetzten - Eluent wenigstens teilweise zum Ausgang (42) zu liefern,
wobei in der Aufnahmestellung die Probenaufnahme (34) fluiddicht von dem Eluent getrennt ist und wobei in der Injektionsstellung in einem Dosierraum (34) der Probenaufnahme befindliche Probe sich mit dem Eluent vereinigen kann,
wobei der Probengeber (10) als Einweg-Bauteil ausgebildet ist;
wobei die Injektionsventilanordnung einen Ventilkörper (12) und ein relativ zu dem Ventilkörper bewegbares Stellglied (14) umfasst;
wobei das Stellglied (14) derart relativ zum Ventilkörper (12) bewegbar ist, dass in der Injektionsstellung der Injektionsventilanordnung der Dosierraum (34) mit dem Eingang (40) und dem Ausgang (42) in Fluidverbindung gelangt; und
wobei das Stellglied (14) sich in einer axialen Richtung erstreckt und gegenüber dem Ventilkörper (12) entlang einer Vorschubrichtung (B) in axialer Richtung bewegbar ist, um die Injektionsventilanordnung von der Aufnahmestellung in die Injektionsstellung zu überführen;
wobei das Stellglied (14) in einem Presssitz gegenüber dem Ventilkörper (12) sitzt, derart dass bei Überführung des Stellglieds (14) aus der Aufnahmestellung in Richtung zur Injektionsstellung die Pressung nicht abnimmt;
wobei im Zuge einer Überführung der Injektionsventilanordnung aus der Aufnahmestellung in die Injektionsstellung eine Verformung wenigstens des Ventilkörpers (12) stattfindet; und
wobei die Verformung wenigstens zum Teil eine plastische Verformung ist.

2. Probengeber (10) nach Anspruch 1, ferner umfassend einen Probenanschluss (20), durch den in der Aufnahmestellung der Injektionsventilanordnung die zu analysierende Probe in die Probenaufnahme (22, 34) aufnehmbar ist.

3. Probengeber (10) nach Anspruch 1 oder 2, wobei die Probenaufnahme (22, 34) wenigstens zum Teil in dem Stellglied (14) ausgebildet ist.

4. Probengeber (10) nach einem der vorherigen Ansprüche, ferner aufweisend einen auf das Stellglied (14) einwirkenden Stellantrieb (S).

5. Probengeber (10) nach einem der vorherigen Ansprüche, wobei in dem Ventilkörper (12) wenigstens ein Strömungskanal (38) ausgebildet ist, der in Zusammenwirkung mit dem Stellglied (14) zumindest in der Aufnahmestellung und in der Injektionsstellung der Injektionsventilanordnung einen Eluentdurchgang (38, 48; 38, 50) zwischen dem Eingang (40) und dem Ausgang (42) herstellt.

6. Probengeber nach einem der Ansprüche 1 bis 5, wobei die Injektionsventilanordnung ferner in eine weitere Stellung umschaltbar ist, in welcher keine Fluidverbindung zwischen Eingang (40) und Ausgang (42) besteht.

7. Probengeber (10) nach einem der vorherigen Ansprüche, wobei der Ventilkörper (12) einen Hohlraum (24) aufweist, in welchem das Stellglied (14) aufnehmbar ist.

8. Probengeber (10) nach einem der vorherigen Ansprüche, wobei die Probenaufnahme (22, 34) einen in dem Stellglied (14) und/oder zwischen dem Stellglied (14) und dem Ventilkörper (12) ausgebildeten Dosierraum (34) umfasst, der in Aufnahmestellung der Injektionsventilanordnung mit dem Probenanschluss (20) in Fluidverbindung steht oder in Fluidverbindung bringbar ist.

9. Probengeber (10) nach Anspruch 8, wobei der Dosierraum (34) ein vorbestimmtes Volumen aufweist.

10. Probengeber (10) nach Anspruch 9, wobei das Volumen der Probenaufnahme (22, 34) und/oder des Dosierraums (34) einstellbar ist.

11. Probengeber (10) nach Anspruch 10, umfassend wenigstens einen Dosierkolben (16) zur Einstellung des Volumens der Probenaufnahme (22, 34) und/oder des Dosierraums (34).

12. Probengeber (10) nach einem der Ansprüche 1 bis 11, wobei die Probenaufnahme (22, 34), insbesondere der Dosierraum (34), mit Eluent vorfüllbar ist.

13. Probengeber (10) nach Anspruch 12, wobei die Injektionsventilanordnung ferner umschaltbar ist von einer Vorfüllstellung, in welcher die Probenaufnahme (22, 34), insbesondere der Dosierraum (34), in Fluidverbindung mit dem Eluentstrom steht, in die Aufnahmestellung.

14. Probengeber (10) nach einem der Ansprüche 11 bis 13, wobei der Dosierkolben (16) in der Aufnahmestellung auf die Probenaufnahme (22, 34) und/oder den Dosierraum (34) zur Veränderung des Volumens derselben einwirkt.

15. Probengeber (10) nach einem der vorherigen Ansprüche, wobei in dem Stellglied (14) und/oder zwischen dem Stellglied (14) und dem Ventilkörper (12) wenigstens eine Fluidverbindung (48; 50) ausgebildet ist, durch welche zumindest in Aufnahmestellung der Injektionsventilanordnung Eluent vom Eingang (40) zum Ausgang (42) strömen kann.

16. Probengeber (10) nach einem der Ansprüche 5 bis 15, wobei zumindest in Aufnahmestellung der Injektionsventilanordnung das Stellglied (14) derart mit dem Ventilkörper (12) zusammenwirkt, dass Probenaufnahme (22, 34) und Eluentdurchgang (38, 48; 38, 50) hinsichtlich Eluent und/oder Probe fluiddicht voneinander getrennt sind.

17. Probengeber (10) nach einem der vorherigen Ansprüche, wobei das Stellglied (14) in einem Presssitz gegenüber dem Ventilkörper (12) sitzt, derart dass bei Überführung des Stellglieds (14) aus der Aufnahmestellung in Richtung zur Injektionsstellung die Pressung zunimmt.

18. Probengeber (10) nach Anspruch 17, wobei das Stellglied (14) in seinem mit dem Ventilkörper (12) zusammenwirkenden Bereich eine sich in Vorschubrichtung (B) verjüngende Form aufweist, insbesondere konisch oder kegelstumpfförmig ausgebildet ist.

19. Probengeber (10) nach Anspruch 17 oder 18, wobei im Zuge einer Überführung der Injektionsventilanordnung aus der Aufnahmestellung in die Injektionsstellung eine Verformung nur des Ventilkörpers (12) stattfindet.

20. Probengeber (10) nach einem der vorherigen Ansprüche, wobei das Stellglied (14) in seinem mit dem Ventilkörper (12) zusammenwirkenden Bereich derart ausgebildet ist, dass eine Rotation des Stellglieds (14) relativ zu dem Ventilkörper (12) unterdrückt ist.

21. Probengeber (10) nach einem der vorherigen Ansprüche, wobei das Stellglied (14) in seinem mit dem Ventilkörper (12) zusammenwirkenden Bereich mit Gewindegängen ausgebildet ist.

22. Probengeber (10) nach einem der vorherigen Ansprüche, wobei das Stellglied (14) aus einem härteren Material hergestellt ist als der Ventilkörper (12).

23. Probengeber (10) nach einem der vorherigen Ansprüche, aufweisend eine Mehrzahl von Stellgliedern (14A, 14B, 14C, 14D), wobei jedem der Stellglieder (14A, 14B, 14C, 14D) eine jeweilige Probenaufnahme (22, 34) zugeordnet ist.

24. Probengeber (10) nach Anspruch 23, wobei mehreren der Stellglieder (14A, 14B, 14C, 14D), insbesondere allen Stellgliedern (14A, 14B, 14C, 14D), derselbe Eingang (40) und derselbe Ausgang (42) zugeordnet ist.

## Claims

1. A sample dispenser (10) for an analysis device, in particular for an analysis device working according to the principle of liquid chromatography (LC), in particular high pressure liquid chromatography (HPLC), or gas chromatography (GC), comprising
a sample intake (22, 34) for receiving a sample to be analyzed,
an inlet (40) through which an eluent can be supplied,
an outlet (42), and
an injection valve arrangement, which can be switched at least from an intake position to an injection position,
wherein, at least in the intake position and in the injection position, the inlet (40) is in fluid connection with the outlet (42) to deliver the eluent - if applicable, having the sample added thereto - at least partly to the outlet (42), wherein, in the intake position, the sample intake (34) is in a fluid-tight manner separated from the eluent and wherein, in the injection position, sample in a metering space (34) of the sample intake can combine with the eluent, wherein the sample dispenser (10) is configured as a disposable component for single use;
wherein the injection valve arrangement comprises a valve body (12) and an actuator (14) which is moveable relative to the valve body;
wherein the actuator (14) can be moved relative to the valve body (12) such that, in the injection position of the injection valve arrangement, the metering space (34) gets in fluid connection with the inlet (40) and the outlet (42); and
wherein the actuator (14) extends in an axial direction and can be moved relative to the valve body (12) along a feed direction (B) in the axial direction to switch the injection valve arrangement from the intake position to the injection position;
wherein the actuator (14) is, relative to the valve body (12), in a pressing seat such that when switching the actuator (14) from the intake position towards the injection position, the pressing forces do not decrease;
wherein in the course of switching the injection valve arrangement from the intake position to the injection position, a deformation of at least the valve body (12) occurs; and
wherein the deformation is at least partially a plastic deformation.

2. The sample dispenser (10) according to claim 1,
further comprising a sample port (20), through which, in the intake position of the injection valve arrangement, the sample to be analyzed can be received in the sample intake (22, 34).

3. The sample dispenser (10) according to claim 1 or 2,
wherein the sample intake (22, 34) is at least partly formed in the actuator (34).

4. The sample dispenser (10) according to any of the preceding claims, further comprising an actuating drive (S) acting upon the actuator (14).

5. The sample dispenser (10) according to any of the preceding claims, wherein at least one flow channel (38) is formed in the valve body (12), which, in interaction with the actuator (14), forms, at least in the intake position and in the injection position of the injection valve arrangement, an eluent passage (38, 48; 38, 50) between the inlet (40) and the outlet (42).

6. The sample dispenser according to any of the claims 1 to 5,
wherein the injection valve arrangement can further be switched to another position in which there is no fluid connection between the inlet (40) and the outlet (42).

7. The sample dispenser (10) according to any of the preceding claims, wherein the valve body (12) comprises a cavity (24) in which the actuator (14) can be received.

8. The sample dispenser (10) according to any of the preceding claims, wherein the sample intake (22, 34) comprises a metering space (34) formed in the actuator (14) and/or between the actuator (14) and the valve body (12), which, in the intake position of the injection valve arrangement, is in fluid connection or can be brought into fluid connection with the sample port (20).

9. The sample dispenser (10) according to claim 8,
wherein the metering space (34) comprises a predetermined volume.

10. The sample dispenser (10) according to claim 9,
wherein the volume of the sample intake (22, 34) and/or the metering space (34) is adjustable.

11. The sample dispenser (10) according to claim 10,
comprising at least one metering piston (16) for adjusting the volume of the sample intake (22, 34) and/or the metering space (34).

12. The sample dispenser (10) according to any of claims 1 to 11,
wherein the sample intake (22, 34), in particular the metering space (34), can be prefilled with eluent.

13. The sample dispenser (10) according to claim 12,
wherein the injection valve arrangement can further be switched from a pre-filling position, in which the sample intake (22, 34), in particular the metering space (34), is in fluid connection with the eluent stream, to the intake position.

14. The sample dispenser (10) according to any of claims 11 to 13, wherein, in the intake position, the metering piston (16) acts on the sample intake (22, 34) and/or the metering space (34) to change the volume thereof.

15. The sample dispenser (10) according to any of the preceding claims, wherein in the actuator (14) and/or between the actuator (14) and the valve body (12), at least one fluid connection (48; 50) is formed, through which, at least in the intake position of the injection valve arrangement, eluent can flow from the inlet (40) to the outlet (42).

16. The sample dispenser (10) according to any of claims 5 to 15, wherein, at least in the intake position of the injection valve arrangement, the actuator (14) interacts with the valve body (12) such that the sample intake (22, 34) and the eluent passage (38, 48; 38, 50) are, with regard to the eluent and/or sample, separated from one another in a fluid-tight manner.

17. The sample dispenser (10) according to any of the preceding claims, wherein the actuator (14) is, relative to the valve body (12), in a pressing seat such that when switching the actuator (14) from the intake position to the injection position, the pressing forces increase.

18. The sample dispenser (10) according to claim 17,
wherein the region of the actuator (14) interacting with the valve body (12) has a shape tapering in the feed direction (B), in particular a conical or frus-to-conical shape.

19. The sample dispenser (10) according to claim 17 or 18,
wherein in the course of switching the injection valve arrangement from the intake position to the injection position, a deformation of the valve body (12) only occurs.

20. The sample dispenser (10) according to any of the preceding claims, wherein the region of the actuator (14) interacting with the valve body (12) is configured such that rotation of the actuator (14) relative to the valve body (12) is suppressed.

21. The sample dispenser (10) according to any of the preceding claims, wherein the region of the actuator (14) interacting with the valve body (12) is configured with threads.

22. The sample dispenser (10) according to any of the preceding claims, wherein the actuator (14) is made of a harder material than the valve body (12).

23. The sample dispenser (10) according to any of the preceding claims, comprising a plurality of actuators (14A, 14B, 14C, 14D), wherein a respective sample intake (22, 34) is associated with each of the actuators (14A, 14B, 14C, 14D).

24. The sample dispenser (10) according to claim 23,
wherein the same inlet (40) and the same outlet (42) are associated with several of the actuators (14A, 14B, 14C, 14D), in particular with all of the actuators (14A, 14B, 14C, 14D).

## Revendications

1. Distributeur d'échantillons (10) pour un dispositif d'analyse, en particulier un dispositif d'analyse travaillant selon le principe de la chromatographie en phase liquide (CPL), en particulier la chromatographie en phase liquide à haute performance (HPLC), ou de la chromatographie en phase gazeuse (CPG), comprenant
un récepteur d'échantillon (22, 34) permettant de recevoir un échantillon à analyser,
une entrée (40) par laquelle un éluant peut être acheminé,
une sortie (42) et
un ensemble de vanne d'injection commutable au moins d'une position de réception dans une position d'injection,
sachant qu'au moins dans la position de réception et dans la position d'injection, l'entrée (40) est en communication fluidique avec la sortie (42), afin de livrer l'éluant - auquel aura été ajouté l'échantillon le cas échéant - au moins partiellement vers la sortie (42),
sachant que, dans la position de réception, le récepteur d'échantillon (34) est séparé de manière fluidiquement étanche de l'éluant et que, dans la position d'injection, un échantillon se trouvant dans une chambre de dosage (34) du récepteur d'échantillon peut s'unir à l'éluant,
le distributeur d'échantillons (10) étant réalisé comme composant à usage unique ; l'ensemble de vanne d'injection comprenant un corps de vanne (12) et un actionneur (14) mobile par rapport au corps de vanne ;
l'actionneur (14) étant mobile par rapport au corps de vanne (12) de telle sorte que, dans la position d'injection de l'ensemble de vanne d'injection, la chambre de dosage (34) entre en communication fluidique avec l'entrée (40) et la sortie (42) ; et
l'actionneur (14) s'étendant dans une direction axiale et étant mobile par rapport au corps de vanne (12) dans une direction d'avance (B) en direction axiale, afin de faire passer l'ensemble de vanne d'injection de la position de réception dans la position d'injection ; l'actionneur (14) étant logé dans un ajustement serré en face du corps de vanne (12), de telle sorte que la compression ne diminue pas lors du passage de l'actionneur (14) de la position de réception vers la position d'injection ;
sachant que, dans le cadre du passage de l'ensemble de vanne d'injection de la position de réception dans la position d'injection, une déformation au moins du corps de vanne (12) a lieu ; et
que la déformation est au moins partiellement une déformation plastique.

2. Le distributeur d'échantillons (10) selon la revendication 1, comprenant en outre un raccordement pour échantillon (20) par lequel, dans la position de réception de l'ensemble de vanne d'injection, l'échantillon à analyser peut être admis dans le récepteur d'échantillon (22, 34).

3. Le distributeur d'échantillons (10) selon la revendication 1 ou 2, dans lequel le récepteur d'échantillon (22, 34) est réalisé, au moins partiellement, dans l'actionneur (14).

4. Le distributeur d'échantillons (10) selon l'une quelconque des revendications précédentes, présentant en outre un organe moteur (S) agissant sur l'actionneur (14).

5. Le distributeur d'échantillons (10) selon l'une quelconque des revendications précédentes, dans lequel au moins un canal d'écoulement (38) est réalisé dans le corps de vanne (12) qui, en interaction avec l'actionneur (14), établit, au moins dans la position de réception et dans la position d'injection de l'ensemble de vanne d'injection, un passage de l'éluant (38, 48 ; 38, 50) entre l'entrée (40) et la sortie (42).

6. Le distributeur d'échantillons selon l'une quelconque des revendications 1 à 5, dans lequel l'ensemble de vanne d'injection peut en outre être commuté dans une autre position dans laquelle il n'y a pas de communication fluidique entre l'entrée (40) et la sortie (42).

7. Le distributeur d'échantillons (10) selon l'une quelconque des revendications précédentes, dans lequel le corps de vanne (12) présente une cavité (24) pouvant accueillir l'actionneur (14).

8. Le distributeur d'échantillons (10) selon l'une quelconque des revendications précédentes, dans lequel le récepteur d'échantillon (22, 34) comprend une chambre de dosage (34) située dans l'actionneur (14) et/ou entre l'actionneur (14) et le corps de vanne (12), qui est en communication fluidique ou peut être mis en communication fluidique avec le raccordement pour échantillon (20) dans la position de réception de l'ensemble de vanne d'injection.

9. Le distributeur d'échantillons (10) selon la revendication 8, dans lequel la chambre de dosage (34) présente un volume prédéfini.

10. Le distributeur d'échantillons (10) selon la revendication 9, dans lequel le volume du récepteur d'échantillon (22, 34) et/ou de la chambre de dosage (34) est réglable.

11. Le distributeur d'échantillons (10) selon la revendication 10, comprenant au moins un piston de dosage (16) pour le réglage du volume du récepteur d'échantillon (22, 34) et/ou de la chambre de dosage (34).

12. Le distributeur d'échantillons (10) selon l'une quelconque des revendications 1 à 11, dans lequel le récepteur d'échantillon (22, 34), en particulier la chambre de dosage (34), peut être prérempli d'éluant.

13. Le distributeur d'échantillons (10) selon la revendication 12, dans lequel l'ensemble de vanne d'injection peut en outre être commuté d'une position de préremplissage, dans laquelle le récepteur d'échantillon (22, 34), en particulier la chambre de dosage (34), est en communication fluidique avec le flux d'éluant, dans la position de réception.

14. Le distributeur d'échantillons (10) selon l'une quelconque des revendications 11 à 13, dans lequel le piston de dosage (16), dans la position de réception, agit sur le récepteur d'échantillon (22, 34) et/ou la chambre de dosage (34) pour en modifier le volume.

15. Le distributeur d'échantillons (10) selon l'une quelconque des revendications précédentes, dans lequel au moins une communication fluidique (48 ; 50) est réalisée dans l'actionneur (14) et/ou entre l'actionneur (14) et le corps de vanne (12), par laquelle l'éluant peut s'écouler de l'entrée (40) vers la sortie (42), au moins dans la position de réception de l'ensemble de vanne d'injection.

16. Le distributeur d'échantillons (10) selon l'une quelconque des revendications 5 à 15, dans lequel, au moins dans la position de réception de l'ensemble de vanne d'injection, l'actionneur (14) interagit avec le corps de vanne (12) de telle sorte que le récepteur d'échantillon (22, 34) et le passage de l'éluant (38, 48 ; 38, 50) sont séparés l'un de l'autre de manière fluidiquement étanche concernant l'éluant et/ou l'échantillon.

17. Le distributeur d'échantillons (10) selon l'une quelconque des revendications précédentes, dans lequel l'actionneur (14) est logé dans un ajustement serré en face du corps de vanne (12), de telle sorte que, lors du passage de l'actionneur (14) de la position de réception vers la position d'injection, la compression augmente.

18. Le distributeur d'échantillons (10) selon la revendication 17, dans lequel l'actionneur (14) présente, dans sa zone d'interaction avec le corps de vanne (12), une forme effilée dans la direction d'avance (B), en particulier une forme conique ou conique tronquée.

19. Le distributeur d'échantillons (10) selon la revendication 17 ou 18, dans lequel, dans le cadre d'un passage de l'ensemble de vanne d'injection de la position de réception dans la position d'injection, une déformation uniquement du corps de vanne (12) a lieu.

20. Le distributeur d'échantillons (10) selon l'une quelconque des revendications précédentes, dans lequel l'actionneur (14) est réalisé, dans sa zone d'interaction avec le corps de vanne (12), de telle sorte qu'une rotation de l'actionneur (14) par rapport au corps de vanne (12) est inhibée.

21. Le distributeur d'échantillons (10) selon l'une quelconque des revendications précédentes, dans lequel l'actionneur (14) est réalisé avec des filetages dans sa zone d'interaction avec le corps de vanne (12).

22. Le distributeur d'échantillons (10) selon l'une quelconque des revendications précédentes, dans lequel l'actionneur (14) est fabriqué dans un matériau plus dur que le corps de vanne (12).

23. Le distributeur d'échantillons (10) selon l'une quelconque des revendications précédentes, présentant une pluralité d'actionneurs (14A, 14B, 14C, 14D), dans lequel un récepteur d'échantillon (22, 34) est affecté à chaque actionneur (14A, 14B, 14C, 14D).

24. Le distributeur d'échantillons (10) selon la revendication 23, dans lequel la même entrée (40) et la même sortie (42) sont affectées à plusieurs des actionneurs (14A, 14B, 14C, 14D), en particulier à tous les actionneurs (14A, 14B, 14C, 14D).
